# EUROPEAN PATENT APPLICATION

(11) **EP 4 631 590 A2**
(43) Date of publication of application: **15.10.2025**
(21) Application number: 25198834.1
(22) Date of filing: 12.10.2022
(51) Int. Cl.: A63F 13/69

(54) **VISUAL PROGRAMMING ENVIRONMENT FOR DEVELOPING INTERACTIVE MEDIA PROGRAMS**

(30) Priority: 12.10.2021 GB 202114588
(62) Divisional of application: 22793795.0
(71) Applicant: Wales Interactive Group Limited, Cardiff CF64 1SA (GB)
(72) Inventor: PRING, Richard, Cardiff (GB); BANNER, David, Cardiff (GB); LEIGH, Samuel, Cardiff (GB); JEFFERY, Lee, Cardiff (GB)
(74) Representative: Stanners, David Ralph

(57) **Abstract**

The invention resides in a system and method of at least one of creating, evaluating, compiling and executing a process. The invention is suitable for creating an interactive media script, such as a movie or a game, the editing of such interactive media script and producing an output directly from the said script for execution on a multimedia device. The process is defined by nodes and pathways represented graphically on a user-interface. The interaction with the process is determined by the associated node data and variables underlying the process. Nodes can include at least one of data, such as contain machine executable code or text, choices, actions and conditions that determine selectable choices. Choices can be selected on the output of a node to determine which pathway is selectable. Pathways are selectable via choices on node outputs. Choices can have conditions that are based on the variables. Evaluation of the workspace that determines the executable script can be evaluated/simulated to assess problems, errors and/or performance criteria of the associated program and/or machine operated by the program.

## Description

### Field

This disclosure generally relates to methods and systems for creating, evaluating, compiling and executing executable script. The executed script, when executed on a machine, can enable interactive multi-directional branching of a process, which can be non-linear and include multiple formats. The disclosure is particularly suited, but not limited, to a system having a user-interface for creating steps and pathways in a process, analysing said steps, said pathways and their interactions and converting the contents of the steps and pathways upon the user-interface into executable code. The invention also relates to such a system for creating an interactive media script, such as a movie or a game, the evaluation and/or editing of such interactive media script and producing an output file directly from the said script for execution on a multimedia device.

### Background

Programs for creating processes, such as movies or games are known. Such programs produce flow-charts outlining the steps of a process such that an overview in the form of a graphical representation can be appreciated and/or communicated with a third party for implementation. For example, an online program can facilitate the configuration and operation of a website. Known programs are electronic annotations of pencil-and-paper workflows, or in the style of "Choose Your Own Adventure"^{™} books, in which a reader makes choices that influence the story and the ending. Known processes provide basic interaction.

### Summary

The invention generally resides in a system and method of at least one of creating, evaluating, compiling and executing a process. The process can be embodied in a computer program or script. The process, when executed upon a machine enables user interaction with the machine.

The process is defined by nodes and pathways represented graphically on a user-interface. The interaction with the process is determined by the associated node data and variables underlying the process. Nodes can include at least one of data, such as machine executable code or text, choices, actions and conditions that determine selectable choices.. Choices can be selected on the output of a node to determine which pathway is selectable. Variables, which can be global to all of the nodes, can be used to determine the selectable choices.

The system and method can provide a means for enabling two or more of creating, evaluating, compiling and executing the process. By configuring the choices on the output of a node the creation, evaluation or compilation can be simplified because a process following a pathway and arriving at a node can execute the data associated with the node automatically i.e. independently of variables, as per the intentions of the operator of the machine on which the process is running. The process can then execute the data within the node i.e. run at least one of executable content, an action upon the variables and determine choices, which can have associated conditions that are determined by the variables. In this way limitations upon a node can be removed because the node is not required to process logic e.g. fixed logic, in order to be executed - upon a pathway reaching a node the data therein can be executed e.g. video content played, an action can be taken upon the variables, and/or selectable choices presented depending on whether conditions are met. The variables can be global, which results in the execution of the compiled program being non-linear and/or interactive, because a change to a variable by a first node can impact upon the choices available to at least a plurality of subsequent nodes.

The system and method can determine a selectable pathway from a plurality of pathways, said pathway including nodes and representable graphically on a user-interface, wherein the pathways define routes through the set of nodes. The graphic representation can be made on a workspace i.e. a graphic user interface of a first machine. The system includes at least one set of nodes, which at least one of update variables and process variables to determine selectable a pathway. Pathways are selectable via choices on node outputs. Choices can have conditions that are based on the variables.

The invention can reside in a method of at least one of creating, evaluating, compiling, and executing a process for execution on a machine. Each of the creating, evaluating, compiling, and executing can be performed on a dedicated machine, or part thereof. The system and methods herein are suitable for creating, evaluating, compiling, and executing an interactive media program for execution on an electronic device, such as a television, phone, tablet or games console for implementing an interactive game or movie. The process includes: retrieving data derived from to a set of nodes representable graphically on a user-interface, said set of nodes connected via pathways, wherein the pathways define routes through the set of nodes and/or retrieving said data from a register, and said data includes: machine-executable content and/or script; and variables that determine selectable pathways between the set of nodes; and at least one of assembling, evaluating, compiling and executing said data as machine-readable instructions for executing in a machine configured to execute the machine-executable content and/or script. Overall, the user interface can be provided on a workspace that can support graphical programming of interactive programs or scripts for execution upon another machine, while enabling evaluation of the process. Evaluation can include step-by-step analysis and/or analysis of the complete program. Evaluation can include (i) program e.g. script related errors and/or inefficiencies, and/or (ii) errors and/or inefficiencies associated with the performance of the another machine on which the script is executed.

The invention can also reside in a method of configuring a node within a network of pathways, said node and said pathways defining, at least in part, an interactive process that can be executed on a machine, wherein said node contains machine executable data e.g. a program, such as an .exe file, JSON or XML file, and can at least one of update a set of variables and/or determine whether a pathway is selectable by the interactive process based on the status of at least one variable in the set of variables.

The system taught herein can support the compilation of a workspace having a plurality of nodes, pathways and variables, all of which enable the creation of an interactive script or program for execution on a machine. The potential quantity of combinations of nodes, pathways and variables and can result in a myriad of executable configurations. The teaching herein not only supports the creation of the program in a practical manner but enables the evaluation of the problems, errors and/or performance criteria of the program and/or the machine upon which the program is executed through a simulation of executable configurations prior to compilation.

Overall, the invention resides in a method of at least one of creating, evaluating, compiling, and executing a process for execution on a machine, said process including: retrieving data derived from to a set of nodes representable graphically on a user-interface, said set of nodes connected via pathways, wherein the pathways define routes through the set of nodes and/or retrieving said data from a register, and said data includes: machine-executable content and/or script; and variables that determine selectable pathways between the set of nodes; and at least one of assembling, evaluating, compiling and executing said data as machine-readable instructions for executing in a machine configured to execute the machine-executable content and/or script.

According to an aspect of the invention, there resides a method of compiling instructions for execution on an electronic media device. The instructions can be compiled for evaluation. The media device can be a gaming console, personal computer, television or handheld phone or tablet. The method comprises retrieving data derived from a set of nodes representable graphically on a user-interface, said set of nodes connected via pathways, wherein the pathways define routes through the set of nodes. The data includes: machine-executable content and/or script; and/or variables that determine selectable pathways between the set of nodes. The method comprises compiling said data into machine-readable instructions for executing in a machine configured to execute the machine-executable content and/or script.

According to another aspect of the invention, there resides a computer implemented method of providing a user interface for creating instructions e.g. a program or script, for execution on a machine. The method can provide an evaluation of the instructions. The machine can be manufacturing equipment, a control system, a gaming console, personal computer, television or handheld phone or tablet. The method comprises providing a workspace upon which a set of nodes is representable graphically, said set of nodes connected via pathways, wherein the pathways define routes through the set of nodes. The workspace has a set of variables, and the nodes comprise data that includes: machine-executable content and/or script; and/or actions upon variables that determine selectable pathways between the set of nodes. The workspace can be defined by a common data set, which can be extracted and held in a register. An evaluation of the program or script can be provided for each configuration of the workspace.

The method can further comprise: simulating, using the common data set, and reporting on the performance e.g. performing an evaluation of the workspace i.e. the problems, errors and/or performance criteria of the program and/or the machine upon which the program is executed through a simulation of executable configurations prior to compilation; and/or compiling the common data set into machine-readable instructions for executing in a machine configured to execute the machine-executable content and/or script. The set of nodes can include: a graphical user-interface representation, including individual nodes connected by pathways; and/or settings, wherein said settings can include at least one of the variables, the executable data assigned to the node, the node conditions, the node actions, node parameter and node events. The compilation output can enable evaluation and/or can create a data file or an executable file, such as an XML, JSON or PDF file. When executed on a machine, these executable files provide an interactive program that enables an operator to follow a pathway as determined by at least one of the nodes, choices and variables created in the system.

Determination of selectable pathways using the variables can occur at a node, wherein the node has choices, and each choice connects to different pathways, and at least one choice having a condition that determines whether it is selectable. Selecting a pathway can determine the next node that is processed during execution of the compiled data. The node, and the data retrieved therefrom, can function as an interactive building block that determines selectable choices on a pathway based on underlying variables.

The execution of the machine-readable content and/or script can enable at least one of: determination of the selectable pathways at a specific node within the set of nodes based on the variables, wherein the variables include initial variables and/or variables updated by actions performed on the preceding pathway; and updating the initial variables and/or latest variables that are updated by actions performed at a specific node within the set of nodes.

It can be appreciated, therefore, that the set of variables can be dynamic and can enable the changing variables to determine the selectable choices, with their associated conditions, in the selected pathway. The selectable choices can change as the process is executed, thus making the overall process changeable and dynamic in response to the pathways selected and the actions performed by the nodes. The choices can change because nodes on the preceding pathway can modify the variables through their actions, such that subsequent selectable choices are updated. Choices are updated if they have a condition that is determined by the variables and said condition is met, such that a choice is available, or vice versa. The process, therefore, can provide a method for compiling interactive multi-dimensional script on a machine, such as a gaming console. The variables can be dynamic such that they are updated at a node e.g. by an action taken at said node.

Following creation of script on a workspace of a graphical user interface, and evaluation of the script using simulation techniques the script can be compiled before executing the compiled script on a machine. The execution of the machine-readable content and/or script can determine multi-directional interactive routes through the pathways, when implemented on a machine. Said routes can be determined by nodes based on initial values of the variables and/or updated values of the variables that determine the latest variables as a consequence of previously executed actions performed on the preceding pathway. In other words, the node can present selectable choices as a function of the latest status of the variables. Each pathway can define a sequential order in which the machine-executable content and/or script can be executed. The workspace enables an interactive script to be created having a multitude of pathways, and the subsequent evaluation prior to implementation upon a machine enables a myriad of aspects of the script to be simulated i.e. evaluation of the problems, errors and/or performance criteria of the program and/or the machine upon which the program is executed, through a simulation of executable configurations prior to compilation. The data can be retrieved from a common data set including at least one of: the machine-executable content and/or script; the variables that determine selectable pathways between the set of nodes; actions that are the outcome of the execution of the machine-executable content and/or script; and a plurality of formats. Formats can include audio and/or visual content, required for a screenplay. Formats can include game-play simulations e.g. non-player character activity or haptic feedback signals required for game-play experience. Formats can also include executable files or instructions sets for machines. The common data set can be collated and/or compiled simultaneously, such that it can be evaluated prior to compilation. The common data set can be held on a register, and said register can be populated during the creation of the process and accessed during evaluation and compilation. The system and method enable evaluation of the data within the register.

The set of nodes can comprise different types of nodes. The nodes can include: a start node that only has an output connection; an intermediate node having an input connection and an output connection, and connected to the start node via a pathway; and an end node only having an input connection, and connected to the intermediate node. An intermediate node can be one of: a branch node that can include choices and determine which choices are selectable; a function node that, in addition to the properties of a branch node includes executable media content, which can include at least one of interactive text, audio, visual, audio-visual and haptic operations.

The set of nodes includes at least one of: a plurality of end nodes, and a plurality of pathways connecting the start node, at least one intermediate node and each of the plurality of end nodes; a plurality of intermediate nodes; at least one of the start node and an intermediate node have a plurality of output connections. Selectable connections to a subsequent node on the pathway can be determined from data defining conditions and/or weightings at a specific node and include at least one of: a default connection, when no action is taken or input is available; a first connection based on a condition, wherein said condition is determined from the status of the variables; a second connection based on an alternative conditions determined from the status of the variables. The selectable connections to a subsequent node on the pathway can be determined randomly, pseudo-randomly or using a weighted selection criteria. The selectable connections can be weighted such that the probability of connecting to one subsequent node is higher than connecting to another subsequent node.

The variables can be changeable and include: a Boolean variable, changeable to either a true status or a false status from an initial given value; a number variable that can be set, added or subtracted from an initial given value; a string variable that can be checked against an initial set of characters that, when they match, returns a true statement. Variables can be configured with an initial value. A pathway can be selectable from a specific node if a condition at the specific node in the pathway has been met. The condition can be determined from at least one of whether: a condition is equal to or not equal to a Boolean variable, which is either true or false; a numerical condition is equal, not equal, less than or more than a number variable; a text entry matches, at least in part, a string variable. A pathway can be selectable only if multiple conditions have been met.

Each node in the set of nodes contains data including at least one of: properties of the node, including at least one of a title of the node, a description of the node, a summary of the node, a text description of the node, script e.g. a screenplay script, descriptions of the asset that the node represents and a media file; actions that modify the variables; selectable connections to a subsequent node on the pathway; content including information associated with the function of the node; executable files; links to external files; parameters; events; and machine-executable script.

Descriptions of the asset can include machine configuration information, movie scene configuration e.g. lighting, sound, seasonal weather information, properties of the possessions of a character. Content can include text that appears on-screen that is presented to represent narrative or choices e.g. during execution or evaluation mode. In evaluation mode, the content can include the relevant script e.g. screenplay script and/or screenplay information. The machine executable script can be machine instructions, such as an mp4 file.

Each node in the set of nodes can be one of: an action node, including at least one of an instruction to update the variables, connections to selectable pathways determinable based on conditions that evaluate the variables, data for controlling an external device, and a multimedia data configured to play a multimedia file; an evaluation node, including at least one of an instruction to update the variables, and connections to selectable pathways determinable based on conditions that evaluate the variables; and a weighted node, configured to automatically evaluate the state of the variables at said weighted node and automatically select the next node.

The method can include providing a graphical user-interface, creating the set of nodes and the pathways on the graphical user-interface and entering data associated with said set of nodes on said graphical user-interface. In this aspect the data extracted from the user-interface includes setting data and graphical data, the content of which is collated in a register for further processing.

The nodes, pathways and variables of the workspace, and the associated common data set represent script that can include errors that result in a failed or inefficient compilation of the script. Further, the errors and/or inefficiencies can result in the compiled script being executed inefficiently upon a machine. Moreover, the data underlying each node includes content that determines the assets and/or resources required to operate the machine e.g. a manufacturing device or implement a screenplay for a movie or game, which requires management of assets and/or resources.

Methods herein enable evaluation through simulation of the script represented upon the workspace that can report, pre-compilation, at least one of: an error-count, e.g. incomplete script, missing information, underutilised elements of the script, faulty pathways, missing information; the computational resources required by a machine to compile and/or execute the script represented by the selected path, which indicates the processing power and/or cost required to execute the script upon a machine; and the resources required to execute an external machine or process using said program. Targets for the quantity of errors and/or the performance level can be set prior to creating the script via the workspace, and the simulation of the workspace enables a comparison of the target versus the actual the quantity of errors and/or the performance level.

Evaluation and/or simulation can be performed in stages, such that a user and/or evaluation tool can recall which pathways and nodes have already been evaluated, thus enabling a user and/or evaluation tool to return to a previous end-point to continue evaluation.

According to another aspect of the invention, there resides a computer implemented method, the method comprising: evaluating and/or simulating data representing machine-executable script for compilation into machine-readable instructions that executes said machine-executable script for execution of an interactive program on an electronic device. The data can be held in a register. The register can obtain the data from a workspace that represents, at least in part, a graphical representation of the script. The program can be for an interactive game or movie. The workspace can include a set of nodes recorded on a user-interface, said nodes connected via a pathway and representable graphically. The data can include at least one of: machine-executable content and/or script; and a set of variables associated with the set of nodes, said set of variables including an initial value and/or a present value determined by the machine-executable content and/or the script in the data on the selected pathway between the connected nodes. The evaluation and/or simulation can determine for at least one pathway, problems, errors and/or performance criteria with respect to a threshold. The problems, errors and/or performance criteria can be presented in a report that is included upon or otherwise within the workspace. In response to the report, the workspace can be reworked. If the reported problems, errors and/or performance criteria meet a set criteria the workspace can be compiled.

According to another aspect of the invention, there resides a method of evaluating data representing machine-executable script. Said data can be compiled into machine-readable instructions that executes said machine-executable script for execution on a machine. The machine can be an electronic device for an interactive game or movie. The method comprises retrieving data from a register, said register containing data derived from a set of nodes recorded on a user-interface, said nodes connected via a pathway and representable graphically. The data includes at least one of: machine-executable content and/or script; a set of variables associated with the set of nodes. The nodes can include actions, which update the variables. The nodes can include choices. The choices can be selectable. The selectable choices can be determined by conditions that depend on the variables. The variables can include an initial value and/or a present value determined by the machine-executable content and/or the script in the data on the selected pathway between the connected nodes. Evaluation can include simulated execution of the data. The data can be held in a register. The data can be evaluated prior to compilation into machine executable script. Evaluation can determine, for at least one pathway, whether at least one pathway of connected nodes is executable and/or comprises a quantity of errors and/or the performance level above a threshold.

Evaluation can enable a stepwise evaluation of each pathway. Stepwise evaluation can be presented on a graphical user interface. The stepwise evaluation can enable evaluation of the transition along the pathway between two nodes. Evaluation can present the errors and/or performance level in the data for revising the data for the set of nodes. The evaluation can be interrupted to enable an operator to update the set of nodes to reduce the errors below the threshold or achieve a target level of performance. The system and method enable the creation and evaluation to be performed in respective modes, and to toggle between said modes.

According to another aspect of the invention, there resides a method of evaluating data representing machine-executable script for compilation into machine-readable instructions that executes said machine-executable script. The method comprises: retrieving data from a register, said register containing data derived from a set of nodes recorded on a user-interface, said nodes connected via a pathway and representable graphically. Said data includes machine-executable content and/or script, and a set of variables associated with the set of nodes. Said set of variables includes an initial value and/or a present value determined by the machine-executable content and/or the script in the data on the selected pathway between the connected nodes. The nodes and pathway can be represented graphically on a graphical user-interface. The machine-executable content and/or script can include machine instructions or operational code or multi-media files including at least one of audio, video and/or haptic/sensory information. Script can be actionable content, such as structured programming code. Content can be video files, such as mp3, or video files such as mp4.

The method can determine for at least one pathway whether at least one pathway of connected nodes is executable and/or comprises errors above a threshold, and/or at least one of: presenting the errors in the data for revising the data for the set of nodes, and updating the set of nodes to reduce the errors below the threshold. Additionally or alternatively to the determination of whether a pathway can be executed or has errors, the method enables a node-by-node stepwise evaluation of the execution of the machine-executable script. During the stepwise evaluation on a user-interface data at least one of: updates are observable; executable content can be watched or evaluated; actions upon the variables can be observed; and the rationale for conditions can be presented.

Node data can include: a title of the node; a description of the node; content including information associated with the function of the node, such as actions and/or conditions; and machine-executable script. The method can further comprise assembling and converting the data into machine-readable instructions for executing in a machine configured to perform the machine-executable script. Execution can be restricted to occur only if the errors and/or performance level are below the threshold.

The method can further comprise at least one of: determining for at least one node the selectable nodes in the pathway to which the at least one node can proceed based on a condition, said condition determined from the present value of the set of variables at the at least node on the pathway; updating the set of variables based on the pathway selected; and updating the set of nodes in the preceding pathway. All selectable nodes can be viewed on or via the user-interface. Nodes can be viewed on the user-interface together with the variables and/or the node properties, which can include choices, actions, conditions and weightings. The errors and/or performance evaluation can be presented on the user-interface.

The user-interface can include at least one of: a node window, in which a set of nodes are configurable and connectable via pathways, wherein an error with a node is indicated with a flag upon the node; a project panel, configured to display a list of errors; and a properties panel, which lists the properties of a selected node and highlights the error associated with said node. Selecting the error in either the node window and/or the project panel can automatically present the selected error in at least one of the corresponding node window, the project panel and properties panel.

The graphical user-interface can enable an operator to progress through all pathways in a stepwise manner i.e. one node at a time, which is achievable by retrieving the data associated with said set of nodes, including the setting data and the graphical data.

According to another aspect of the invention, there resides a method of providing a user-interface for evaluating and/or compiling data representing machine-executable script for compilation into machine-readable instructions. The instructions can execute said machine-executable script for execution on a machine. The machine can be an electronic device for an interactive game or movie for executing the instructions to play an interactive game or movie. The method comprises providing a user-interface. The user-interface can have a first window including a set of nodes are representable graphically, said nodes connected via a pathway said data including machine-executable content and/or script. The user-interface can have at least one of: a second window including a configurable list of variables and/or errors associated with the set of nodes, said variables including an initial value and/or a present value determined by the machine-executable content and/or the script in the data on the preceding pathway; and a third window including properties of a selected specific node selected in the first window. The method can include collating the graphical representation of the set of node and/or the variables and/or the properties from the first window and the second window and/or the third window for incorporation with the data e.g. into a register. The evaluation and/or compilation can determine for at least one pathway whether at least one pathway of connected nodes is executable and/or comprises errors above a threshold. Additionally or alternatively, the method can include at least one of: presenting the errors in the data for revising the data for the set of nodes, and updating the set of nodes to reduce the errors below the threshold.

According to another aspect of the invention, there resides a method of providing a user-interface for evaluating and/or compiling data representing machine-executable script for compilation into machine-readable instructions that executes said machine-executable script. The method comprises providing a user-interface. The user interface has: a first window including a set of nodes are representable graphically, said nodes connected via a pathway said data including machine-executable content and/or script; and at least one of: a second window including a configurable list of variables and/or errors associated with the set of nodes, said variables including an initial value and/or a present value determined by the machine-executable content and/or the script in the data on the preceding pathway; and a third window including properties of a selected specific node selected in the first window. The method includes collating the graphical representation of the set of node and/or the variables and/or the properties from the first window and the second window and/or the third window for incorporation with the data. The compilation can retrieve the data associated with said set of nodes, including the setting data and the graphical data, for the register.

The method determines for at least one pathway whether at least one pathway of connected nodes is executable and/or comprises errors above a threshold, and/or at least one of: presenting the errors in the data for revising the data for the set of nodes, and updating the set of nodes to reduce the errors below the threshold. Additionally or alternatively to the determination of whether a pathway can be executed or has errors, the method enables a node-by-node stepwise evaluation of the execution of the machine-executable script. Errors can be presented on the user-interface.

According to another aspect of the invention, there resides a method of writing an electronic script e.g. screenplay script for an interactive game or move, said script comprising: interactive multiple pathways that determine the order in which the script is executed; and nodes in the pathways that comprise: machine instructions for execution on a machine; and branch connections for determining selectable pathways. The script can include variables and determine selectable branch connections based on the status of the variables. Nodes can include an action to amend the variables.

According to another aspect of the invention, there resides a non-transitory computer-readable storage medium having stored thereon executable instructions that, as a result of being executed by a processor of a computer system, cause the computer system to perform the method of any claim.

According to another aspect of the invention, there resides a computer system comprising a plurality of machine elements, wherein each machine element in the computer system comprises: a processor; and memory including executable instructions that, as a result of execution by the processor, causes the system to perform the method of any claim.

The method and system herein are particularly suited to an interactive multi-dimensional process having multiple paths and variables that change depending on the path chosen through the process. The process is particularly suited to interactive media, such as games and movies. The nodes allow the process to be broken down into stages and the pathways between the nodes can be configured to create multiple paths e.g. storylines in a game or movie. The choices made during the interactive process can have a downstream effect and impact upon subsequent choices, which can be achieved using the interaction between the nodes and the variables. As well as containing machine executable content, a node can perform an action and update a variable and/or conditionally present choices i.e. select the next pathway from the node based on the variables.

The invention can provide a core mechanism i.e. the nodes and pathways, created on a graphic UI, together with the associated data and underlying/global dynamic variables, for implementing a dynamic and interactive multi-dimensional process. The underlying/global dynamic variables in combination with actions and/or choices at nodes on the pathways enable an interactive programming interface. The data can include: the executable files e.g. videos; actions that can update the variables; and choices that are selectable depending on conditions that depend upon the variables. The core mechanism is common to each of the functions including creation, evaluation, compilation and execution of the process when an executor/machine (transducer) is connected to the system (e.g. add Unity^{™} and a games console). The system of the invention can incorporate two or more of these functions. A register that collates the data can be configured to provide a common element to each of these functions. The register can hold the data and/or information on the pathways and the nodes on those pathways. Nodes can function to (i) hold executable data, (ii) perform actions upon the variables and (iii) dynamically present selectable choices determined by conditions and variables. The teaching herein supports the compilation and simulation of script for determining the performance of, for example, a machine e.g. for a manufacturing process or building control system, industrial process, movie, game and the like. The complexity of interactive machines requires a myriad of operations to be evaluated in both the program or script being compiled and in the performance of the machine post-compilation, and the teaching herein provides a tool for simulating and evaluating. Evaluation can be performed via step-by-step analysis and/or scoring individual factors. A threshold score can be implemented e.g. whether a criteria is met by comparing the outcome in a report against the criteria set. During the evaluation, the evaluator simulates the operation of a machine using the script as represented by the nodes, pathways and variables upon the workspace. Errors, inefficiencies and performance factors associated with the script, as compiled, and the machine operation can be determined through the simulation pre-compilation. Simulation can be performed in-between each user modification of the workspace.

In light of the teaching herein, the skilled person would appreciate that aspects of the invention were interchangeable and transferrable between the aspects described herein, and can be combined to provide improved aspects of the invention. Further aspects of the invention will be appreciated from the following description.

### Brief Description of the Drawings

Aspects and examples of the present disclosure will now be described, by way of example only, and with reference to the accompany drawings, in which:
Figure 1 is an interface of the system used to implement the method of compiling and/or evaluating script for implementation on a machine, wherein the central portion displays connected nodes that determine the script flow;
Figure 2 is schematic of the system connected to a machine that executes the compiled script;
Figure 3 shows the details of the navigation bar of the interface of Figure 1;
Figure 4a shows how a node might be configured, while Figure 4b shows a new node of the type shown in Figure 1 in a pathway including a preceding node and a following node;
Figure 5a shows an enlarged view of the node properties panel shown in Figure 1;
Figure 5b shows a video node of the type shown in Figure 1, said node including choices enabling the pathway to lead to a plurality of different nodes;
Figure 6 shows a drop-down menu selectable from the right-hand portion of Figure 1 in which the properties of a node can be configured;
Figure 7 shows a section of the menus selectable from the left-hand portion of Figure 1 in which chapters can be configured, each chapter including a set of nodes;
Figure 8 shows the "Problems", such as errors and/or performance factors, in which a user can evaluate problems and performance in the script that will result in errors and/or inefficiencies after compilation;
Figures 9 and 10 show, respectively, the view of the panel 10 prior to adding a chapter and a variable properties of a node;
Figure 11 shows a drop-down menu selectable from the right-hand portion of Figure 9 in which the type of variable can be selected when adding a variable;
Figures 12a to 12c show, respectively, the configuration of Boolean, Number and String variables;
Figure 13 shows a branch node connected to two different nodes via two different choices;
Figure 14 shows a section of Figure 5a that is used to configure the conditions that determine which choices are selectable in Figure 13;
Figure 15 shows a section of Figure 5a for adding choices to a node;
Figure 16 shows how a variable can be added to a condition;
Figure 17 shows a variation of Figure 15 in which a time and duration can be configured upon the choices;
Figure 18 shows the detail of the lowermost section of Figure 13 in which parameters and events can be configured in relation to a node;
Figures 19a and 19b show, respectively, the first and second halves of an example first chapter of the invention;
Figures 20a and 20b show, respectively, the first and second halves of an example second chapter of the invention, while Figure 20c shows the node properties of the first node of chapter 2 and Figure 20d indicates the rationale presented for available choices;
Figure 21a shows the user-interface of Figure 1 for the first node in the first chapter of Figure 19a, while Figure 21b shows a portion of the user-interface of Figure 1 for a subsequent node in the first chapter of Figure 19a;
Figure 22 shows the user-interface of Figure 1 for the second node in the first chapter of Figure 19a;
Figures 23a to 23d show a series of windows in which the script created by the nodes of Figure 1 can be evaluated on a step-by-step basis;
Figure 24 is a schematic of the system supporting the workspace and implementing the compilation and/or evaluation of the process represented by the graph in the workspace;
Figure 25 is a schematic of a means for creating a process;
Figure 26 is a schematic of a means for evaluating a process;
Figure 27 is a schematic representation of a system that extracts data from a register for compilation and subsequent execution for controlling a machine;
Figure 28 represents an executable file containing executable data, variables, nodes and pathways configuration, node data and node conditions/actions for operating a machine;
Figure 29 is a flow-chart representing the relationship between nodes, variables and pathways; and
Figure 30 is a process of evaluation/simulation of a workspace.

### Detailed Description of Illustrative Examples of the Disclosure

### Overview

Examples of some possible applications and use cases are now provided for the purpose of illustration, without limitation.

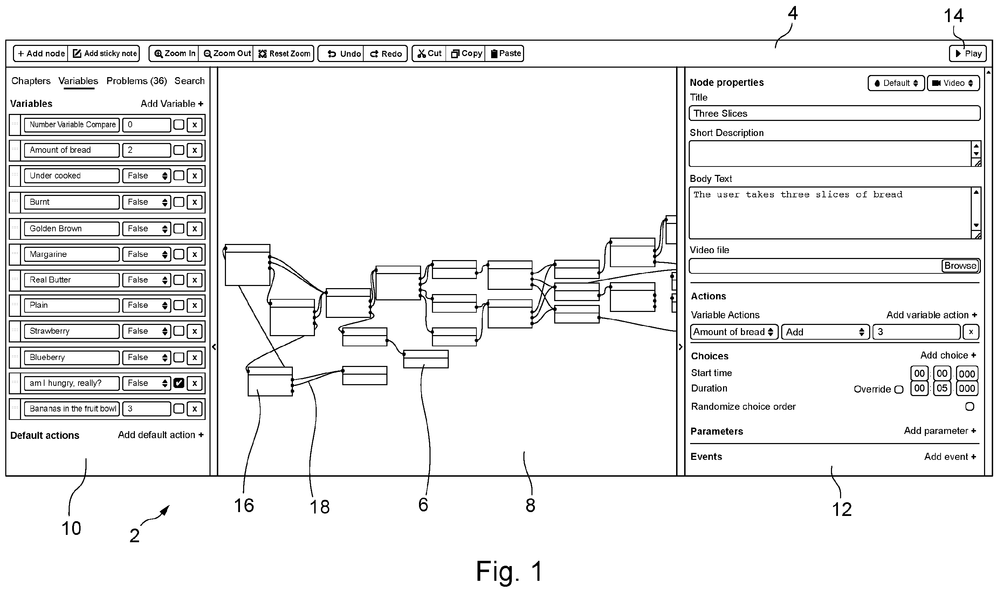

The following description relates to a system having a graphical user-interface having a workspace 2 as shown in Figure 1, said workspace enabling the creation and configuration of a graphical representation of a machine executable process and the associated data to be created, evaluated and compiled without requiring coding by an operator. By way of example, the graphical representation is of a screenplay script for an interactive machine, which can be a multimedia platform, such as a movie or a game, or a production machine, producing goods e.g. a 3D printer. The workspace supports programming of the operation of an interactive machine prior to compilation. By assessing the errors and/or performance of the program prior to compilation then savings can be made on unnecessary computational cost associated with compilation. Further, the problems and/or performance of the program derived from the workspace 2 can be determined e.g. scored through simulation using an evaluator that avoid the need for compilation and evaluation testing post-compilation. Upon compilation, the data derived from the workspace 2 is compiled into machine-readable instructions for executing in a machine configured to execute the machine-executable content and/or script.

The workspace 2 includes a navigation bar 4, for editing and manipulating the content of a graph 6 representing the process in a graph window 8. Adjacent the graph window is a project panel 10 configured to present overview data associated with the process being worked upon in the graph window 8, and a properties panel 12 presenting data associated with the elements of the graph 6. The project panel 10 and the properties panel can be selectively hidden from view enabling the graph window to occupy the width of the workspace, as viewed - this can be achieved by clicking on the small arrows in the boundary between zones of the workspace 2. The workspace includes a play-button 14 that, when selected, enables an operator to perform a real-time evaluation of the process created in the workspace prior to compilation. Evaluation can be performed in a stepwise manner i.e. stepping through and evaluating the execution of the process step at a time. Evaluation can additionally or alternatively include a simulation of the system to determine the performance of the program and/or a machine operating the program e.g. the resources required to operate the machine can be determined through evaluation pre-compilation. Simulation of the system can involve obtaining and simulating the process as represented by the workspace 2 by evaluating the script in advance of compilation for a machine.

The graph includes nodes 16 and pathways 18 connecting the nodes. The nodes can be considered as steps in the process. The nodes can contain machine instructions, or parameters that determine the operation of a machine. The compilation of the process represented by the graph 6 and the associated data in the project panel 10 and the properties panel 12 involves collecting said data and determining the possible routes through the graph 6 defined by the nodes and pathways. The data underlying the nodes 16 include machine-executable content and/or script that can be executed in machine. After compilation the process can be executed e.g. within the system that created it, or on a machine, such as a gaming console.

To select from the available choices at each node during execution an operator of a machine is presented with choices via a user-interface e.g. on-screen operable menu that operates the process. By way of example, if the process involved the execution of a video file, then the choices appear on a user-interface screen on which the video file is executed, wherein said choices are selectable e.g. as operable buttons, on the screen - via at least one of touch, mouse-click or voice selection. If the process involved the execution of machine instructions for the operation of a CNC machine or 3D printer then the choices can appear on a control panel, which can be an electro-mechanical panel on the machine, or a soft-panel on a computer screen. The choices are configured on the output of a node i.e. after the executable content has been processed. In this way, (i) the choice of pathway 18 selected considers actions performed on the machine, which can include a current action that updates the variables that determine the available choices, and/or (ii) the operator selects a pathway and direction for further operations. Only one choice is selectable on the output of a node. The set of choices can include a default choice that is selected by default e.g. if no other choices are selected, or a timer has elapsed.

The data further includes a set of variables that at least one of (i) determine which pathways are selectable based on predetermined conditions, and (ii) change in response to an action executed at a node in the graph during execution. The set of variables are configured with a set of default values. Each node can perform at least one action upon the variable, thus updating the variables. In this way the set of variables is dynamic, and can be updated with as the process executes the data within each node selected. As a consequence, the choices on each subsequent node upon a pathway can change based upon the updatable set of variables. The ability to constantly update the variables and influence the determination of choices having conditions enables the process to implement a dynamic and multi-dimensional processes.

By way of example, the system can convert the data derived from the workspace into an executable file format for implementation on an executor and/or a machine, e.g. an Extensible Markup Language (XML) file, or a JavaScript Object Notation (JSON) file, that includes a set of codes, tags or instructions that determine the actions to be performed when the instructions are executed in a machine. The system can also convert the data into an interactive portable document format (PDF) file, in which an operator of a computing device, such as an electronic reading device, can read blocks of text and select choices presented at the end of said block of text. Selecting a choice at the end of a block of text navigates to a subsequent block of text according to the nodes and pathways described herein.

Data extracted from the workspace 2, which can be collated and retrieved from a register, can be gathered to define a blueprint of code that can be used in any form of interactive set of instructions to be performed upon a machine e.g. a games console. When executed in the machine the operator of the machine can determine which pathway through the nodes is taken. In other words, the system and the workspace 2 are a tool that can support at least one of the method of: creating interactive script, which provides for an interactive operation of the machine after compilation; evaluating the script, which can be performed prior to compilation; compiling the script; and executing the script.

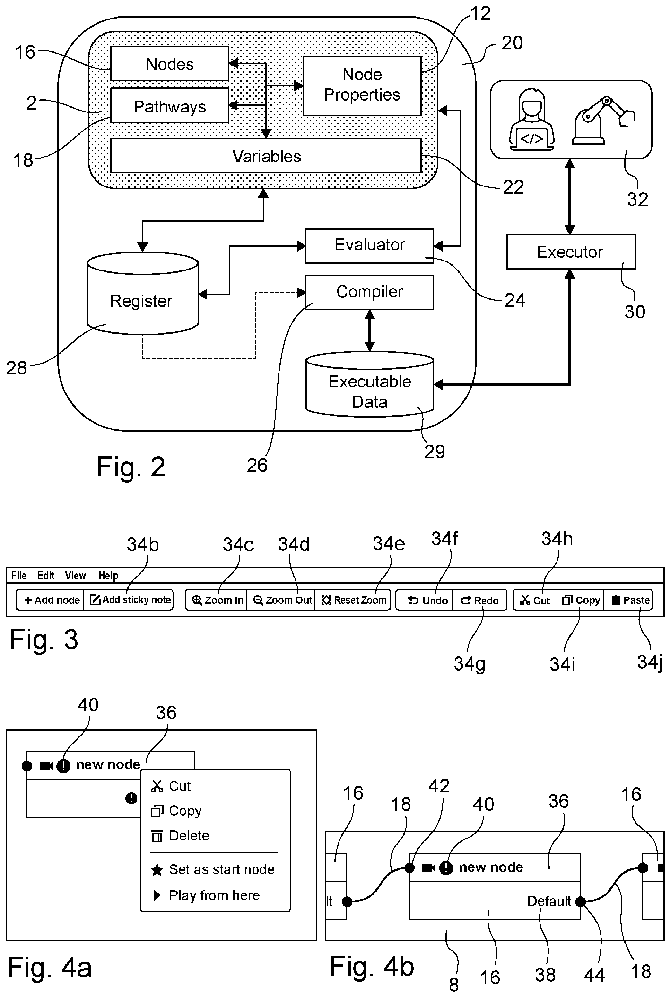

An example of a system 20 for supporting the workspace 2 is represented in Figure 2, in which the workspace supports creation of the data specifying the nodes 16 and the pathways 18, as well as the node properties 12 and variables 22 - all of which determine how the data is executed after compilation. To be clear, a node can perform at least one action that updates the set of variables. The set of variables are, therefore, dynamic, and in light of the changing variables the choices with conditions in downstream pathways can be dynamically changed. Moreover, nodes can include actions that modify the variables. Therefore, the process that is created for execution on a machine is interactive, dynamic and multi-dimensional.

An evaluator 24, which can enable simulation of the executable instructions, and compiler 26 are provided to process the data from the workspace 2, which can be collated in a register 28 prior to evaluation and/or compilation into machine executable data 29 e.g. a program, such as a file e.g. an .exe file. The output from the compiler can be processed by an executor 30, such as an external processor, converting instructions from an executable file 29 into machine 32 operation instructions.

The workspace 2 and system 20 provide a standalone application for creating multidirectional interactive scripts, evaluating said scripts prior to compilation, their compilation and subsequent execution. The script includes the machine executable instructions within the data underlying the nodes 6 in the workspace 2. These scripts are the executable output from the compiler 26 that can be run on a machine, such as an interactive media device e.g. a games console, mobile phone device, television or other such computing device. By way of example, the system enables games and interactive audio-visual films and television programs to be created. Moreover, an interactive script can be created and applied to applications such as 3D printing, CNC machine operations, building management systems or construction planning. In each of these examples of use, the system and workspace enable simultaneous creation of the process and programming via a graphical user-interface i.e. workspace 2 - this brings together machine executable content associated with nodes, which can include multiple mediums, and the available pathways between the nodes, which are selectable after determining conditions based on the variables. Not only can the system support the creation of script for execution but the systems support the evaluation of the output prior to direct compilation of the data within the register 28.

The system 20 can bring together the functions of creation, evaluation and compilation avoiding the need for the separate functions of design, programming, implementation, which involves bottlenecks in the development and feedback loops. Therefore, the system enables consolidation of the process of creating executable output for operating a machine, evaluating and then compiling. This can be achieved because by the system gathers data from the workspace 2, which includes the graphical representation of the nodes 16 and pathways 18, as well as the associated variables 22 and properties 12 of each node in place of traditional programming. The gathered data can be consolidated in the register 28. The system can be web-based and/or cloud-based.

Moreover, execution of the interactive script is interactive and non-linear, and can be evaluated prior to compilation. This can be achieved by the system enabling the creation of nodes and multiple pathways, which can intersect, and by displaying all the technical inputs and outputs visually the system enables a creator to create and evaluate simultaneously.

The system is particularly suitable for complicated interactive processes including technical inputs, outputs and references and compiling the associated data into an exportable file format, such as an XML or JSON file, suitable for any type of digital media production. The exported file can be read by the executor 30 e.g. a plug-in, which reads the instructions and enables a machine 32 to implement the instructions. By way of example, the exported file can be run in a system provided by Unity^{™}, although the exported file is not limited to XML or JSON and the instructions can be read and commanded by any engine/website programmed to do so.

While the methods and system herein are suitable for any type of machine executable process, the examples herein are related to interactive non-linear media, such as interactive games or an interactive television program, in which multiple data formats are required and combined to create the media output. Such formats can be represented by data that includes: information that is visually presentable or mechanically actuatable, such as audio files, video files, text, animation, menus, machine instructions, and the like; actions; non-visual information, such as the length of time required to execute the instructions associated with a node, the resources required to implement the instructions; inherent information, such as details related to the environment in which the instructions are executed, such as temperature, humidity, which can influence the pathway of executable tasks; contextual information, such as the behaviour or actions of the objects or characters represented by the script; and actions, which can change any of the variables and/or information associated with a current node to influence all subsequent nodes. Variables, by way of example, can be used to track and update parameters associated with a character, which can include a range of physical attributes that determine their ability to perform particular tasks, or can include an inventory of possessions. A player character in a game, for example, can be required to perform a task requiring the possession of an object e.g. a key and a degree of physical strength. If during the game play that occurred in the proceeding pathway the operator of the game did not pass through a node that acquired a key i.e. selecting to collect a key and updating the variables to reflect this, and if their actions did not sustain a certain level of health, again tracked by the variables, then certain conditions are not met to make a choice at a node selectable.

The data underlying the graph 6 includes the variables 22, which start with predetermined values that are used for conditional selection of the pathways that can be selected. Further, the variables can be updated in response to actions taken by the instructions within a node 16, which are specified in the node properties 18. Variables, conditions and actions can all be handled through calculations based on Boolean, number, and string variables, which enable the creator to easily adapt and change the selectable pathways that a user experiences when executing the script on a machine.

The data added to the workspace determines the selectable actions and/or pathways when the instructions therein are executed, which can be executed interactively. Selection of the actions and/or pathways are made through choices presented on a user-interface of the machine performing the executed instructions. The graph 6 is created using different components that influence the structure and execution of the script. The actions taken by nodes and the selectable pathways can be configured using different node types, variable actions, choices based on conditions, wherein said conditions factor in one or more variables. Different node types determine what and/or how instructions are executed during evaluation and/or after compilation.

The system supports evaluation by enabling a node-by-node walkthrough along all possible pathways. The evaluation can simulate execution of the process one node at a time. In this way the viability of a script for execution can be evaluated before compilation. The viability of a script derived from the workspace 2 can be determined based on the number and/or type of errors present in the graph 6 and/or the associated node properties 12. In evaluation mode, the system identifies at least one of the status of the variables, the choices, the rationale for a choice are selectable, or blocked from selection. The evaluation mode enables a prototype review and simulation that would not otherwise be possible until all content was created and compiled. The system enables a creator to plan, evaluate and quickly modify the set of instructions represented by the nodes 16, pathways, 18 and node properties 12. Null/error factors requiring changes can be addressed quickly without reprogramming. Through the workspace 2 a creator can toggle between the creation of the process, by modifying the nodes and pathways and the associated data, and evaluation by selecting the 'play' 14 button that opens an evaluation mode.

The evaluator 24 can additionally or alternatively analyse and determine the score for a quantity of performance criteria, or groups thereof. Changes to the workspace 2 can result in an automatic update of the scores, said automatic evaluation simulating all possible executions of the script. A single configuration i.e. with no user intervention requires the determination of all the potential problems and/or efficiencies, which would be incomprehensible for a user to determine. The evaluator 24 performs a simulation of the machine executable script based on the workspace 2 to determine its performance post-compilation. Evaluation through simulation can determine problems in: the graphical definition of the script, implanted on a machine supporting the GUI; and the problems and/or performance of at least one of the compilation requirements, the compiled data, the performance of a machine 32 operating under the control of executable data 29 e.g. a program file such as a JSON or XML file, derived from the compiler 26.

Evaluation is facilitated by at least two of the sections of the workspace i.e. the graph window 8 plus the project panel 10 and/or the node properties 12. The system can identify errors and highlight these simultaneously in two or three sections. Further, selecting an error in one of the sections adjusts the view in the other sections to highlight the same error.

Nodes 16 in the examples herein are shown as stand-alone upon the workspace 2 graph window 8. Additionally or alternatively, nodes can be collated into groups, said groups having individual nodes and pathways. These groups can provide a visual indication of nodes sharing the same function, or collectively implement a function or operation on a machine 32 executing a program derived from the workspace.

### Details

Figure 3 shows a portion of the navigation bar 4 of the workspace 2 in a browser window. The workspace is adapted to fit in a browser window on a single computer screen in its entirety, making it easier for use, although it can be spilt across multiple screens. The navigation bar provides functional buttons that enable 'mouse and click' control over the contents of the graph window 8 for efficient manipulation of the nodes and pathways. The navigation bar has operable soft buttons including: 'add node' 34a, enabling a new node to be added to the graph window 8; 'add sticky note' 34b for placing annotations in the graph window 8; 'zoom in' 34c and 'zoom out' buttons 34d; 'reset zoom' 34e, which brings the portion in the centre of the screen to a readable size; 'undo' 34f and 'redo' 34g; and 'cut' 34h, 'copy' 34i and 'paste' 34j. Each of the operations can additionally or alternatively made via mouse-operations and/or shortcut keys.

As viewed in Figure 1, the graph 6 comprises nodes 16 and pathways 18. A node can be added anywhere in the graph window 8 by using the navigation bar, via the 'add node' 34a button, or a right-click mouse operation and selecting 'add node' from a drop-down menu. The node can be subsequently dragged and dropped within the graph window. Similarly, selecting and right-clicking a mouse button on a node presents a drop-down menu presenting a plurality of operations, as shown in Figure 4a.

Figure 4b shows a new node having two sections: a title bar 36, that contains icons representing the function of the node and/or a description; and section having a list of choices 38, which includes a 'default' option by default. Choices are configured on the output of a node - this enables the choices to take in to account the most recent action and update to the variables. Configuring the choices on the output of a node can simplify the nodes creation, evaluation or compilation because each node then contains at least one of executable content, an action upon the variables and choices, which can have associated conditions that are determined by the variables. In this way the node is not required to process logic in order to be executed - upon a pathway reaching a node the data therein can be executed e.g. video content played, an action can be taken upon the variables, and selectable choices presented depending on whether conditions are met.

The title bar can also include a notification 40 icon, which is used to indicate an error that can be corrected before the graph is compiled into executable code. Nodes can have inputs 42 and/or outputs 44, which are indicated, respectively, by a 'dot' on the boundary edge of the title bar and at least one 'dot' on the boundary edge of the section of choices 38. All outputs 44 must be connected to an input by a pathway 18, as can be seen in Figure 1. A node 16 can be one of: a start node, which has no inputs and only outputs; and intermediate node, which has an input 42 and at least one output 44; and an end node, which has an input but no outputs.

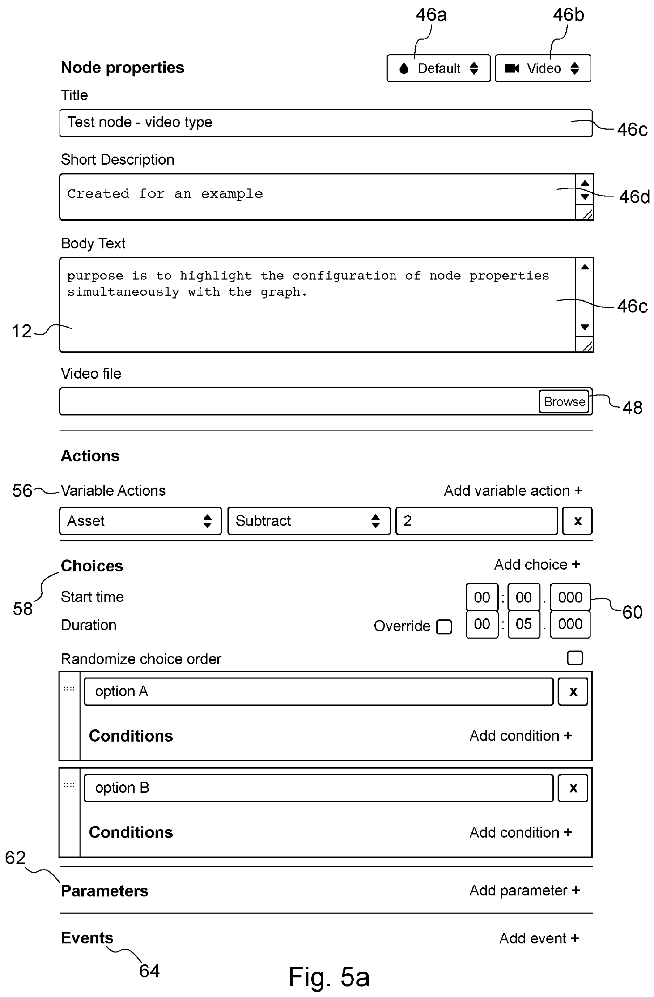

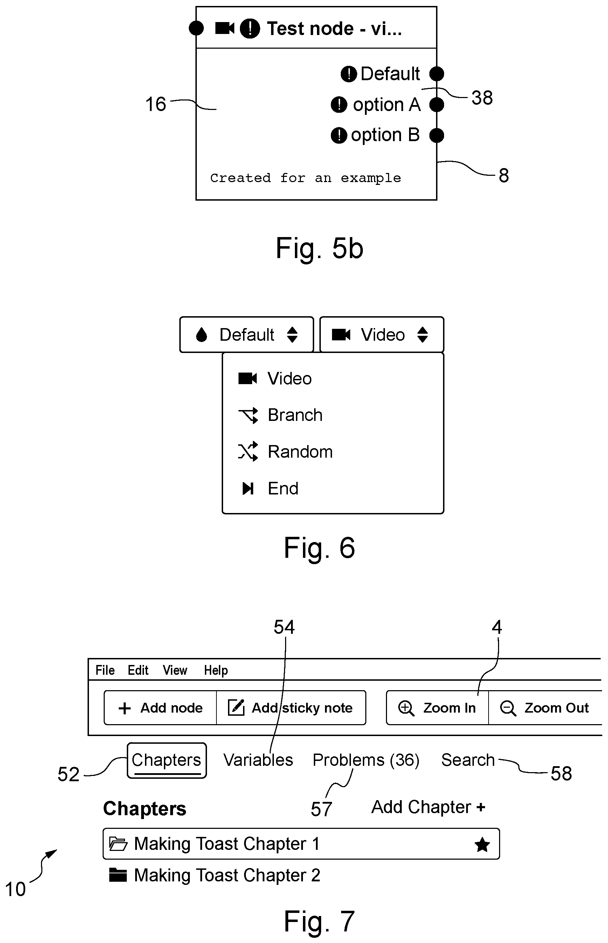

A node can be configured and/or edited by selecting it from the graph window 8 with a mouse-click, which simultaneously loads the properties of the node 16 into the node properties 12 section of the workspace 2 when expanded for viewing, as shown in Figure 1. A detailed view of the node properties 12 window can be seen in Figure 5a, while the corresponding node can be seen in Figure 5b. In this example, the node properties include: a category 46a, which can be an indicator of the type of node; the function 46b of the node, which can be selected from a drop-down menu as shown in Figure 6, and include 'video', 'branch', 'random' or 'end' node; title 46c; a short description 46d; and a body of text 46e, which can hold a dialogue, set of verbal instructions or detailed description of the process being executed by the code underlying the node 16.

The node properties permit an attachment 48, via an upload, of machine executable content or instructions, which in the present example is configured to receive a video file e.g. data that is visually presentable or mechanically or electronically actuatable, such as audio files, video files, text, animation, menus, machine instructions. A video player can be embedded in the workspace 2, thus enabling any multi-media files included in a node to be played back pre-compilation.

The node properties 12 are not limited to these shown and described in relation to Figure 5a. Each node can retain additional information associated with the arrangement of the machine and/or the process required to operate the machine using the program derived from the workspace 2.

Nodes 16 can contain data and parameters associated with the performance of a machine. By way of example, if the machine were a multi-media system for executing an interactive movie or video-game, the node records data associated with a quantity of scenes, properties of those scenes and the resources needed for each scenes. Resources can include at least one of: the quantity of characters e.g. non-player characters in a scene; a quantity and/or type of camera required for a scene; and a quantity of lighting units and/or types of lighting units required for a scene. Resources required for a node can be tagged, such that the quantity and utilisation e.g. frequency of use and periods of use can be simulated by the evaluator.

A node 16 can also include a task that must be performed, wherein a completed task indicative of an achievement. The workspace provides an interface via the node properties that enable tasks and their associated achievements to be embedded in the script prior to compilation. The use and/or probability of encountering a task and associated achievement can be evaluated and reported following a simulation.

In the workspace 2, a node 16 can be cut and pasted, or copied. Components of the node, such as the resources, tasks and parameters described above can, collectively or individually be cut and pasted, or copied e.g. between nodes. In the workspace 2, a node 16 can receive text, e.g. body text 46c, such as formatted or coded text representing a script that includes dialogue, scene details and direction. The text can be received from another software package, such as a word-processing program. The text within a node can include, for example, details for different scenes, characters, cameras, lighting and direction. The workspace 2 supports word-processing functionality that enables the text within a node to be edited and/or formatted.

As mentioned above, the graph 6 includes nodes 16 and the pathways 18, and the node properties 12 in combination with the variables 22 determine the execution of the data. In other words, the pathway between a start node and an end node depends upon the initial variables and the actions and/or conditions taken at each node in the pathway. Figure 5b is a node with multiple choices, with a separate output 44 for each choice. Each choice has an associated pathway 18 that takes in to account the action performed on the machine, which can include an action upon the variables in the immediate node in which choices are presented. A default choice is always provided on an intermediate node because it must connect to a subsequent node, unless it is the last node in the process or chapter. Each choice can be connected to any input providing logic conditions are met e.g. the connection does not create an infinite loop. Clicking on the 'dot' 42,44 of a choice creates a pathway that can be dragged and placed at a 'dot' of another node. Several graphs 6 can be configured to operate together. While the workspace of Figure 1 shows a portion of a graph the processes and/or instructions that the graph represents can be complex and benefit from organisation. Moreover, navigating a graph in the graph window is increasingly manageable if the graph is divided in to two or more sections e.g. representing two or more stages of a process. When executing the program that performs the process underlying two or more sections of graph, the program is configured to automatically save the status of the progress through the graphs between sections. This can be advantageous when the program is a game, and the sections represent stages or levels of the game. Figure 7 shows a portion of the workspace 2 in which the properties panel 10 and part of the navigation bar 4 can be viewed. Selectable properties can be managed in the panel 10, including: chapters 52, which contain a graph 6, or section of graph, and provide efficient navigation to respective sections of graphs, said chapters limited to only one start node per graph 6; variables 54, which are common to all of the graphs 6 and/or chapters 52; a problems 57 section, which provides a list of the errors in the graph, on a chapter by chapter basis, and selecting a listed problem adjusts the view on the graph window 8 and the properties panel 12 to update and focus on the corresponding result; and a key-word search tool 58, enabling any searched aspect of any graph to be identified, in the form of a shortlist, wherein selecting a search result adjusts the view on the graph window 8 and the properties panel 12 to update and focus on the corresponding result.

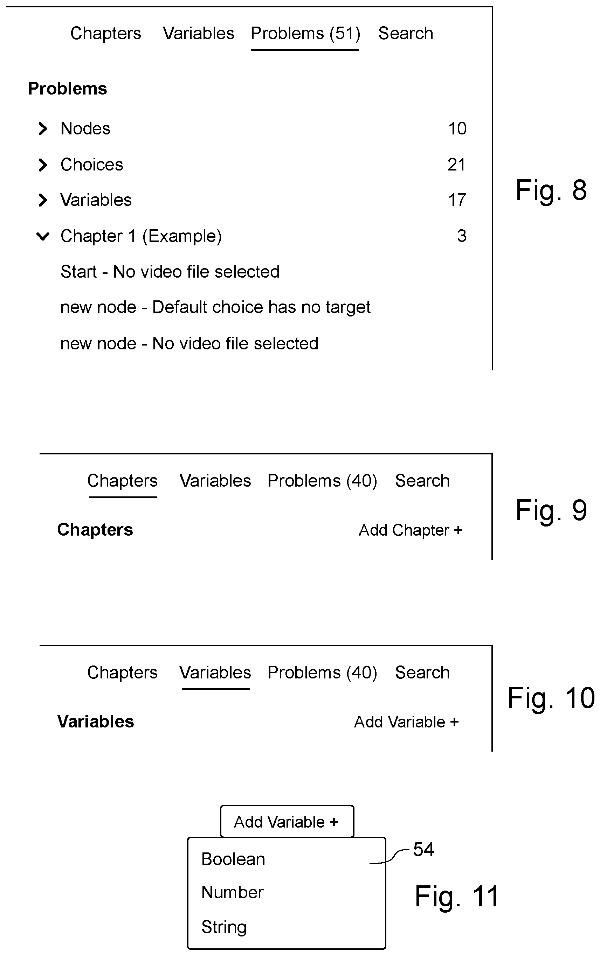

Figure 8 is a view of the problems section 16 of the panel 10 in which all errors are highlighted that inhibit the program from compiling and/or executing without errors occurring. The summary in Figure 8 can additionally or alternatively include performance factors that a user can use to evaluate problems and performance in the script that will result in errors and/or inefficiencies after compilation.

The problems and/or performance criteria can be grouped according to where they originate and/or can be identified, for example, within nodes 16, choices 38, variables 54 or chapters 52. Each of the problems and/or performance criteria listed created a corresponding notification 40 icon in a node 16. In this way, problems and/or performance criteria are returned in a list view and indicate how many problems and/or performance criteria there are per category. When the drop-down list of Figure 8 is expanded, individual problems are identified. By selecting the problem and/or performance criteria the system workspace 2 changes its views automatically to highlight the chapter and node where the problem is located i.e. by changing the view in the graph window 8 and/or highlighting the problem.

In addition, or as an alternative to, the visualisation of problems 57 as shown in Figures 7 and 8, the problems and/or performance criteria of the screenplay script, as represented in the workspace 2, can be represented in tables and/or graphics e.g. using a dash-board. Problems and/or performance criteria in the representation of the screenplay script, as shown in the workspace 2, can additionally or alternatively translate into problems and/or inefficiencies in the machine-executable content and/or script that is derived from the contents of the register 28, compiled and executed upon a machine.

From the register 28 content, the evaluator 24 can simulate the performance of the script when performed upon a machine. By determining the performance in the pre-compilation phase ineffective and/or inefficient compilation can be avoided. Moreover, script that can cause problems and/or influence performance criteria post-compilation, when the compiled executable data is executed upon a machine/executor 30, can be identified e.g. script that will cause the machine to stall, crash or simply perform inefficiently. While the teaching herein enables the determination of a viable program, the problems/criteria by which the pre-compilation analysis, post-compilation and subsequent execution are assessed are based on the resulting operation of the machine 32. The nodes can contain multiple factors associated with assets and resources required by at least one of the machine, the operation of the machine, and the production cost of executing the machine e.g. implementing a screenplay script.

Each of the problems and/or performance criteria can be identified, and different types of problems can be weighted, such that each problem has a score and a total score for a script, or parts thereof, can be determined. The evaluator can determine a score for groups of problems. A threshold score can be established for each problem, group of problems and/or for the script as a whole. A score can then be determined for each problem, group of problems and/or for the script as a whole before the evaluator determines whether a threshold has been exceeded.

By way of example, an evaluator 24 can analyse and determine the score for a quantity of problems or performance criteria, or groups thereof. Scores can be presented in a table and/or dashboard. The evaluator considers all pathways, nodes and choices in the workspace 2, when executed according to the initial variables that can be updated, dynamically, as the script is executed, said variables being global to the nodes 16 and pathways 18 i.e. variables and their updates can influence the choices at all nodes and pathways. Each change made to the workspace 2 can result in an automatic update of the scores, said automatic evaluation running through all possible executions of the script. The evaluation of a single configuration i.e. with no user intervention or revision of the workspace 2, requires the determination of multiple nodes, pathways and variables and all the potential problems and/or efficiencies, which would be challenging if not impossible for a user to determine in a reasonable time. This is, in part, because the global variables and multiple nodes and pathways define a non-linear executable script for, for example, an interactive screenplay script for a game or movie, or Indeed a dynamically operable machine e.g. 3D printer that adapts to external conditions. The evaluator 24, therefore, performs a simulation of the machine executable script based on the workspace 2 to determine its performance post-compilation. While the evaluation of problems and performance criteria can determine problems in the graphical definition of the script as represented upon the workspace 2, the evaluation also can determine the problems and/or performance of at least one of the compilation requirements, the compiled data, the performance of a machine 32 operating under the control of executable data 29 e.g. a program file such as a JSON or XML file, derived from the compiler 26.

As a user populates and revises the workspace 2, the potential problems and/or efficiencies can be determined for each configuration e.g. after each change made by a user. Updates can be made automatically with each change. The evaluator 24 can present problems and performance criteria associated with a number of factors, each of which can be at least one of counted, weighted and scored, such that the programmer, for any one configuration, can obtain a determined level of performance of the machine that will operate according to the program they are creating. For the avoidance of doubt, evaluation is performed on a script as configured via the workspace, and can be repeated with each iteration by a user. However, evaluation can be performed independently of a user and without user input.

In addition to identifying a list of the errors in the graph 6, the evaluator can determine an analysis profile for a quantity of factors:
- The utilisation of a resource consumed or processed by the machine operating under of the control of the program output after compilation of the workspace 2. The machine can support the operation of a virtual environment e.g. an interactive movie or video game, or a physical entity e.g. automation process, such as a 3D printer. Resources can be represented by tags, placed in each node, as defined by the node properties. The evaluator 24 can, therefore, using the tags associated with a resource, determine for all possible paths and actions at least one of the maximum, minimum and average quantity or level of resources required by the machine during execution. By way of further examples, the frequency and time that a tag representing a resource is identified can be determined e.g. the tag can be used to determine the frequency at which a machine needs to be replenished, or determine the occurrence of product-placement in a video or game.
- The characteristic of a screenplay script, including, for example, at least one of: the word count, frequency of words, activity level of each actor, subtitle requirements and audio description requirements. From the screenplay script, the evaluator can determine the set resources required, for example at least one of: the number of camera angles required for each scene, the number of cameras required, the actors and/or props required in each scene for continuity and lighting and/or audio-visual equipment requirements.
- The characteristic of a screenplay script, including, for example, at least one of determining the statistics e.g. maximum, minimums and averages for at least one of: chapters, scenes, choices, pathways, options, endings, outcomes and variables.
- The characteristic of a screenplay script, including, for example, achievements e.g. whether activities are located in game-play. For example, the quantity of achievements in a game, the frequency at which they occur and their difficulty level can be evaluated.
- A factor that indicates at least one of where two paths converge on one and where two paths join. Knowing the quantity of paths and nodes between two points on a pathway indicate the complexity of the resulting program and operations of a machine using said program, said factors influencing the computational costs with compiling and execution.
- The frequency of use and/or the quantity of unused nodes, pathways or variable, all of which up occupy execution time, processing cost and storage space post-compilation. Identifying unused content, or content with low levels of use, can be identified and removed either manually or automatically by the evaluator or compiler.

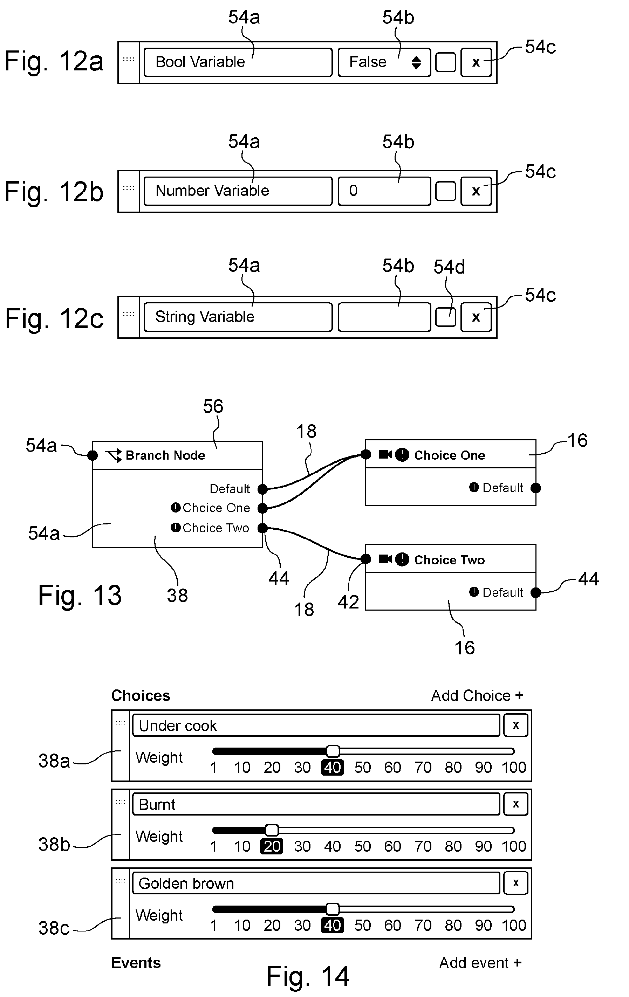

The analysis profile for the or each of the problems and/or efficiencies of the resources listed above can determine a score, which can be compared against a target. A threshold score can be used to determine whether a program will be compiled. The threshold can be used to set a level of computational cost and/or performance for the compilation of the graph in the workspace 2, its execution during the operation of a machine and/or the operational requirements and resources required to operate the machine. Figures 9 and 10 show, respectively, the view of the panel 10 prior to adding a chapter 52 and a variable 54. Different types of variable can be added, by selecting "Add Variable +", including, as shown in Figure 11, and represented, respectively, in Figures 12a to 12c: a Boolean variable, which can only take two values e.g. True or False, and by default, a Boolean variable is set to false; a Number variable, which is used to store specific integer values and can be assigned different values based on the actions input into a node 16 in the process represented by the graph 6; a String variable, which comprises characters including spaces and numbers, and can be used to checks against a sequence of characters and if met returns a value of true, otherwise the result is false. Each added variable can have a customised name 54a, starting value 54b and has a 'delete' button 54c. Each of the variables can be configured as persistent by checking an optional box 54d. The status of a persistent variable can be carried over into a new game and/or a new chapter and, therefore, does not get reset to a default or original value.

Returning to the properties panel of Figure 5a, a node can be configured to perform an action 56 upon a variable 54. Following compilation of the process represented by the graph 6 and the associated data stored in the register 28, execution of the process associated with a node can modify a variable. By way of example, if the process involved the automation of making a cup of tea with two lumps of sugars then one of the variables would be 'lumps of sugar' and have an initial value of two or more, and the node associated with adding two lumps of sugar would include an action that adjusted the variable 'lumps of sugar' by reducing its integer value by two. Alternatively, the status of a variable could be changed from 'true' to 'false', or vice versa, or a string variable could be set to a particular word or phrase. To be clear, an action taken at a node 16 adjusts the variables for all subsequent node choices on the pathway 18 selected.

A node 16 is a point in which pathways 18 intersect and branch, as shown in Figure 13. The action taken at a node can be configured depending on the different node types, as described above in relation to Figure 6, the action 56 it takes, the choices 58 it is configured with, the conditions 60 set within each choice, and the set parameters 62 and events 64 added.

Conditions 60 are configured to determine which choices 38 are selectable by an operator of the machine when selecting which pathway to take. The choices are configured on the output of a node. **In** this way determining which pathway can be selected takes in to account the status of the variables, which can be modified on the preceding pathway, including any action taken by the current node. An operator of a machine is limited to selecting one output i.e. one pathway to follow. And choices can be determined by conditions. An 'end' node 16 can be placed at the end of a chapter, wherein it links the process being executed in one chapter to a subsequent chapter, or the end of a story, wherein the process ends. Each end node has an input, but no output.

In the present example of Figure 5a, a node 16 that contains machine executable content or instructions is represented by a 'video' node, and upon executing a program that processes the data associated with such a video node a machine would be instructed to play the associated video file. Alternatively, a node that is required only confirm or select a pathway through the graph is referred to as a 'branch' node, said branch node having the same functionality and configuration as a 'video' node except that there is no associated machine executable content. In yet another alternative, a node 16 can be configured as a 'random' node, wherein the choice selected from a plurality of choices, and the subsequent pathway 18 followed, is selected randomly based on weightings added to each choice. Each time a 'random' node is reached in the execution of the code underlying the graph 6 this node selects a choice and pathway to branch to based on weighted values assigned to each choice. By way of example, Figure 14 shows a node 16 having three choices, 38a, 38b, 38c, named "under cook", "burnt" and "Golden brown" respectively, with the probability that each of the respective nodes is selected, automatically, is 25%, 50% and 30%. These probabilities can be adjusted to influence the weighting, and in the example shown the probabilities are adjusted using sliders.

In practice, video nodes and branch nodes 16 of the type shown in Figure 13 are the most frequently used in a process to be executed. The choices 38 are branch points and each output 44 must be linked to another node. In the graph window 8 clicking and selecting an output 44 with a mouse creates a pathway 18 that has an end that can be dragged and connected to the input 42 of an existing node, or if the pathway is terminated in an area with no node 6 then a new node is automatically generated and entered on the graph 6. Each node with an output 44 includes a default output, such that the process follows this path in the event of choice not being selected if conditions are not met or if there are no choices altogether.

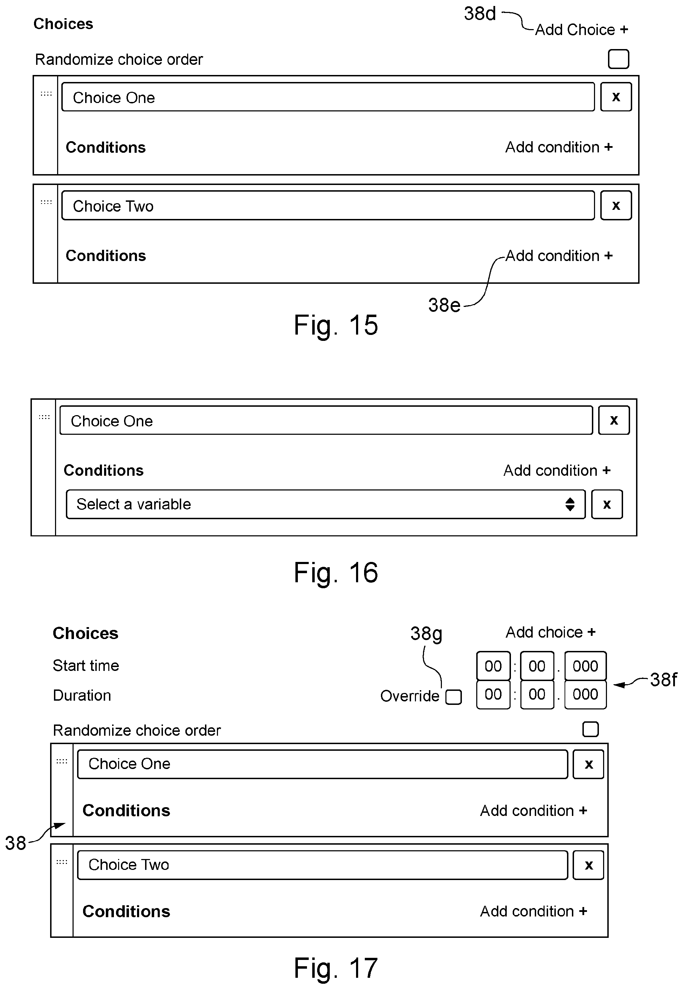

Figure 15 is a view of section of Figure 5a in which the choices 38a, 38b can be configured by selecting to 'add choice +' 38d and/or 'add condition +' 38e. Further, each choice can be reordered by clicking and dragging them in to different positions, as viewed within the properties panel 12, which updates the order in which the choices 38 appear within each of the nodes 16 as viewed in the graph window 8. The order in which the choices appear from top to bottom can be the order of execution, such that if the conditions cannot be met by the uppermost choice, as viewed, the execution of the process will move on to the next choice until the conditions have been met and branch accordingly. By selecting the option 'randomize choice order', the node 16 will randomize the execution order differently each time.

The names of the choices can be altered, and choices can be deleted. The names of the choices also appear during the execution of the process, represented by the graph 6, upon a machine that includes a user-interface that displays the choices are receives instructions on which choice is selected. When a node 16 includes a video file, then the choices appear on a user-interface screen with the video being executed. In other words, in a video node the choices can appear over the video in the machine e.g. games console and can be interactable.

A choice can be configured to be selectable only if the conditions 60 are met. Referring to Figure 16, a choice can be configured with a condition 60 after a creator selects to 'add condition +' 38e. If a condition is not met any interaction with the choice is disabled, which can be by removing the choice from view on the user-interface screen or indicating that the choice is not selectable e.g. being greyed-out. The "default" option does not appear on a user-interface during execution of the process. A condition is determined from the status of a variable 22. During the execution of the executable code associated with a node 16 the conditions are determined by calling the status of the variable and return a result that either permits the choice 38 or disables the choice.

After selecting to add a condition a variable 60 is selected from a drop-down menu that is presented, and the condition configured. The variables are configured as per Figures 9 to 12c, as described above, and if the variable: is a Boolean variable, the condition determines if the variable is Equal to or Not Equal to a True or False condition; is a Number variable, the determines if the variable is Equal or Not Equal, Less than or Greater than a number variable set in the project; and is a String variable, the condition checks against a string variable in the project if its Equal or Not Equal to the characters. These conditions are provided by way of example and alternative conditions can be checked and/or combined. To be clear, multiple conditions can be applied to a choice. It is possible for all conditions to be satisfied and all of the choices to be selectable.

As described above, the choices presented at each node during execution appear on a user-interface screen e.g. on which the video file is executed. Figure 17 presents a view of Figure 5a, in which the presentation of the choices 38 can be configured. By default, the choices can be displayed on the user-interface of a machine during execution until a selection is made. Alternatively, the choices can be displayed for a predefined period e.g. 5 seconds. The time that the choices are displayed can be controlled via a timer 38f that enables manipulation of the duration of the time by changing the Start time or the Duration. Changing the start time will affect what time the choices are presented after the process e.g. video file is played associated with the node 16 is commenced. The time can be configured in the form of a timecode e.g. minutes: seconds: milliseconds. Selecting an override 38 option will increase the time from end of the execution of the process e.g. the last frame of the video. However, if the start time is any different from the default (00:00:000), the duration is from the time inputted.

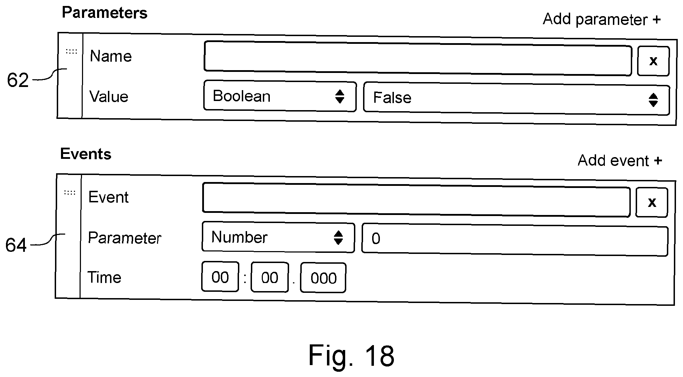

Figure 18 shows the interface of the node properties 12 that enables parameters 62 and events 64 to be configured in relation to a node. Parameters enable external software and/or content to be handled and/or included in the process being executed. Events enable specific timing of an event to trigger an action and/or execution of the data. By default, a parameter will trigger at the start of a node.

### Example - overview

As described above, the invention relates to a system for implementing a graphical representation of a machine executable process and methods configured to at least one of convert, via compilation, the graph 6 of the process into machine-readable instructions for executing in a machine and/or evaluate the graph e.g. the process can be simulated and/or errors can be identified and corrected. The evaluation and/or compilation can be achieved without requiring coding by an operator. The process is represented on a graph 6 by the nodes 16 that can provide choices that enable the process to branch along different pathways 18. The process, therefore, is suitable for representing a machine executable process in which variations can be made according to changing circumstances.

The number of possible applications of the invention to such a process is extensive and, therefore, the examples herein focus upon aspects in order that a skilled person can apply the teaching herein to any process that has variables and requires interaction during execution on a machine, and benefits from a simple and efficient mechanism for compilation, fault-finding and assessment of a process.

In the example below, the invention is demonstrated using the creation and evaluation of an interactive video in which the operator of media device interacting with the video can decide how the video is executed. In the video the operator is asked if they are hungry and whether they are hungry, and gives them the choice of going through the process of eating a banana or making toast. The executable video, the steps to create the process in the workspace 2, evaluation and then compilation are analogous to creating an interactive game, or establishing a manufacturing process including executable instructions for fabricating an object on a CNC machine or 3D printer, wherein rather than execute a video file on a media machine the process would involve operating and co-ordinating a tool head e.g. a printing nozzle or drill-bit. Both 'making toast' in an interactive video and operating a machine involve numerous operations, machine executable instructions, technical variables and pathways that depend on said variables between initiating and completing the execution of a process.

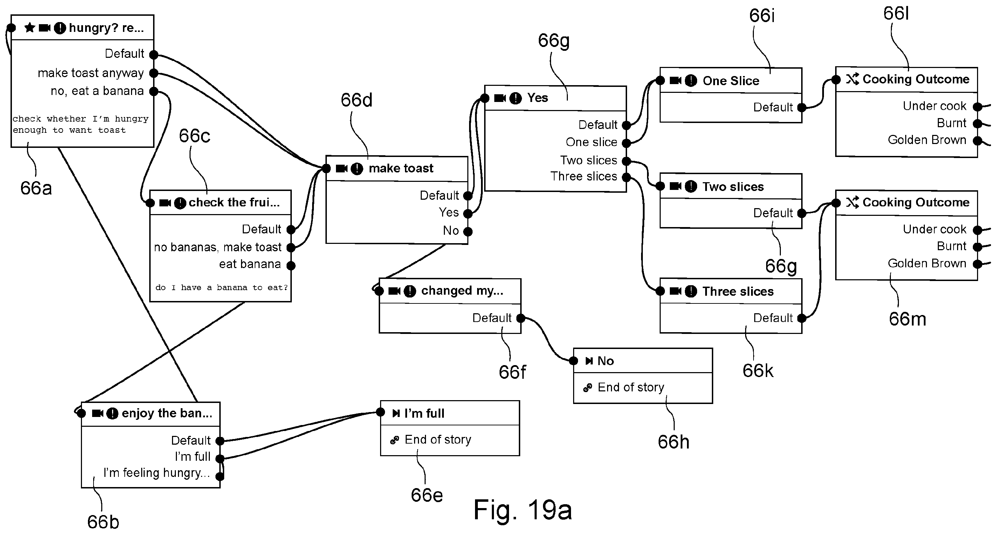

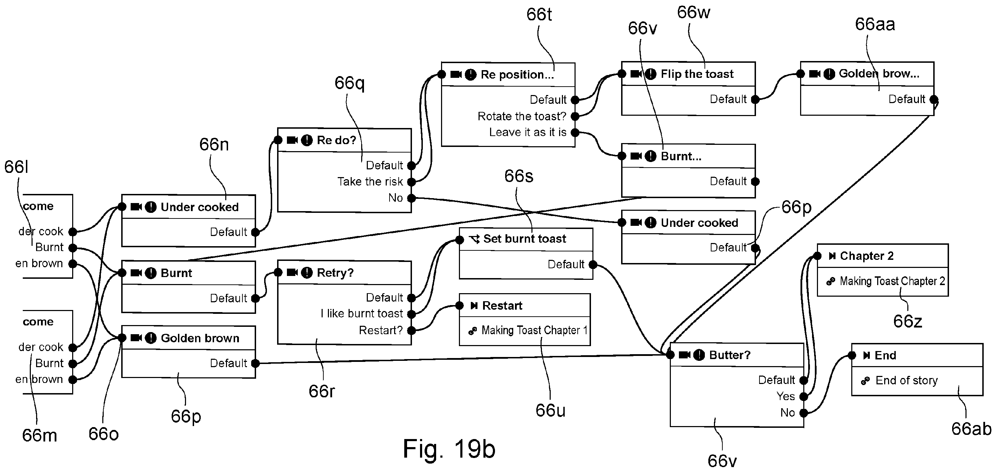

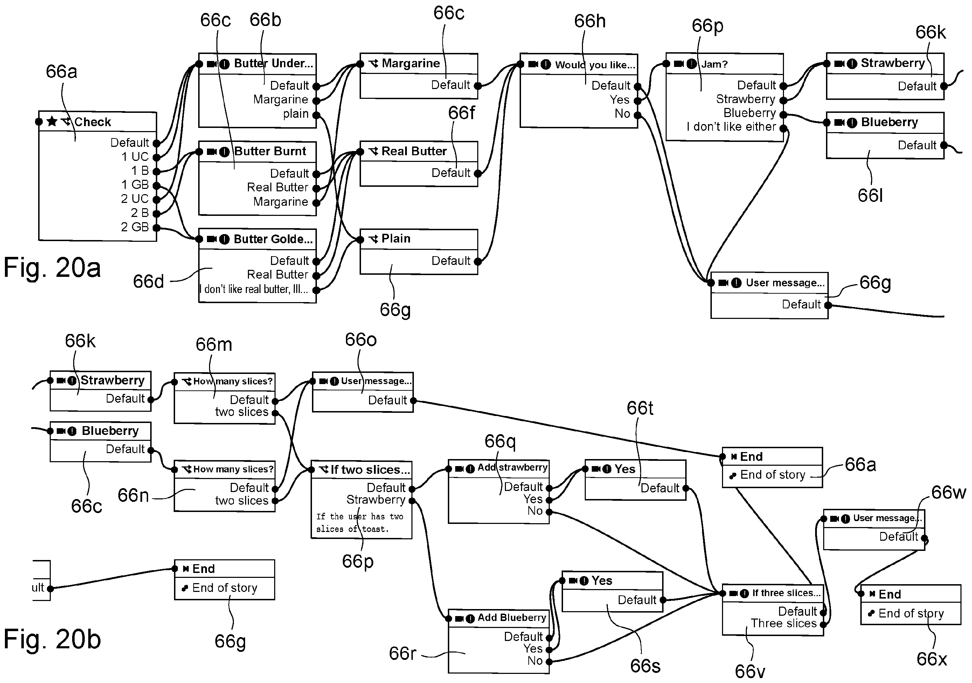

Figures 19a and 19b represent, respectively, the first and second halves of a graph 6 for a first chapter of a process representing the execution of an interactive video in which an operator or user prepares to have a snack, namely eating a banana or preparing toast - hypothetically from a first-person's point of view. Figures 20a and 20b represent, respectively, the first and second halves of a graph 6 for a second chapter, which follows on from the first chapter, representing the execution of an interactive video in which an operator adds a spread to the toast prepared in the first chapter.

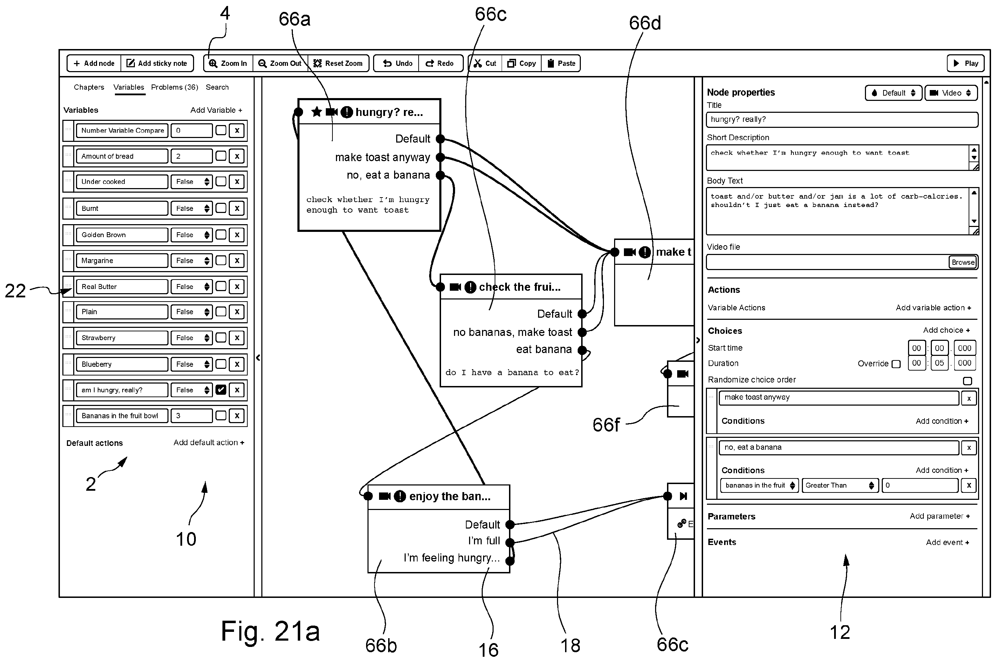

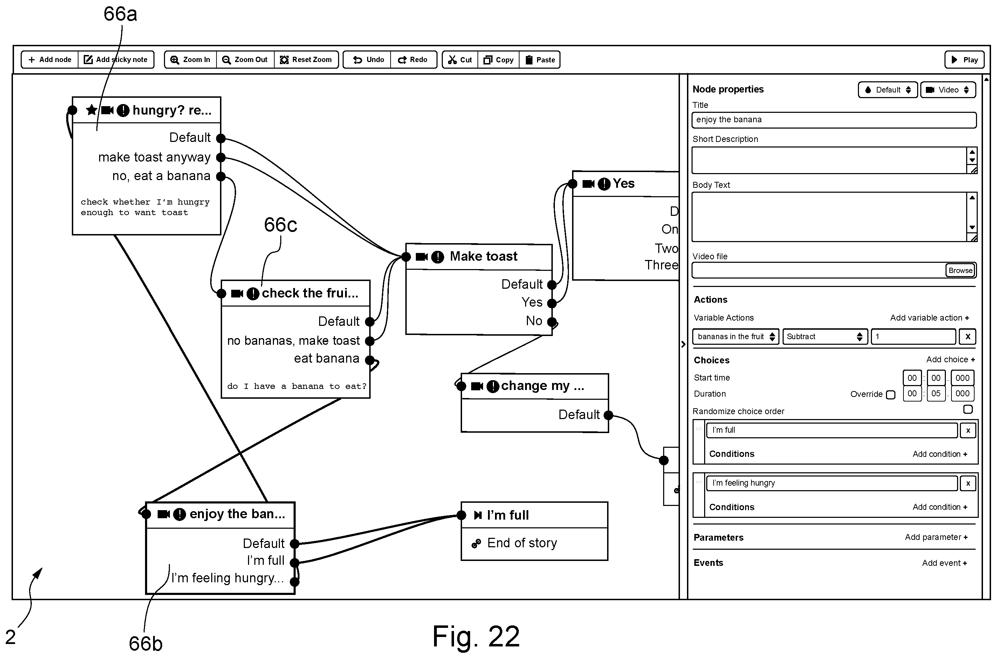

Figures 19a and 19b include nodes 16, labelled 66a to 66ab, connected by pathways 18, said nodes and the features thereof defining a process as described above in relation to Figures 3 to 18. Figures 20a and 20b, similarly, include nodes, labelled 68a to 68x, and pathways therebetween. For efficiency, explanations of the configuration of a node 16 using the node properties 12 panel and the configurations of variables 22 in the project panel 10 will focus on node 66a, highlighted in Figure 21a, and node 66b, as highlighted in Figure 22. Only a limited number of pathways through each chapter 52 are being described in the examples herein.

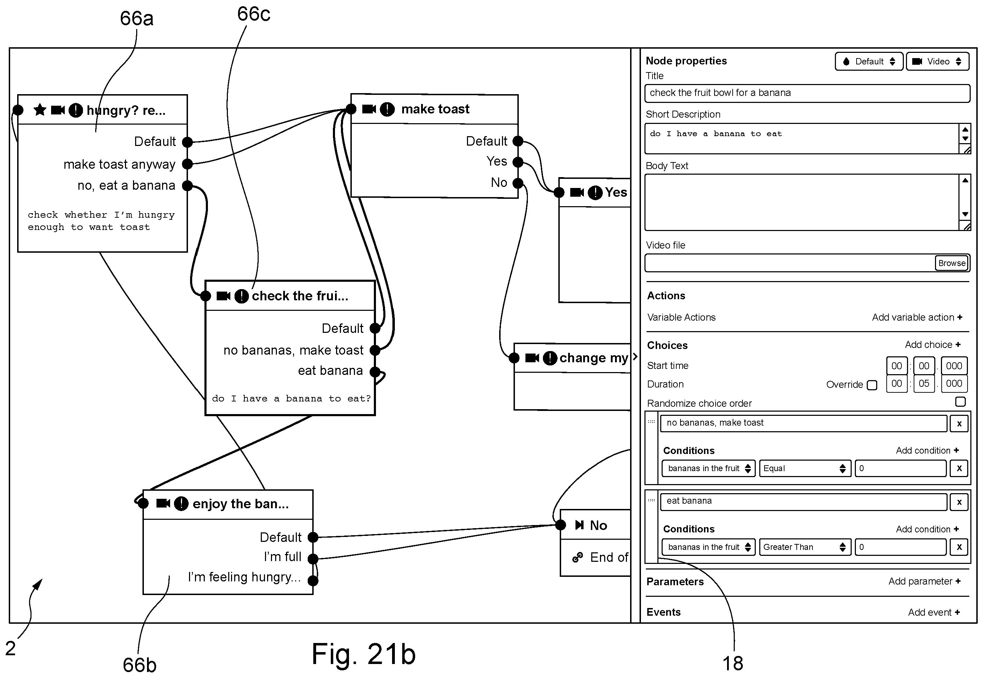

Node 66a includes in the title 36 an icon representing a video camera, and all other nodes 16 having this icon similarly contain an executable video file 48, that can be uploaded via the node properties 12 panel, as shown in Figure 5a, Figure 21a and 21b. The title also includes a 'start' icon, indicating that this node and its associated data is the first to be executed when the process is run on a machine.

Using the 'snack' example, the execution of the short interactive video in node 66a can begin with playing a media file that displays a fruit bowl containing 3 bananas, and a plate containing slices of bread. A narrative script can be added to the node properties for guiding a voice-over for the media file that announces, audibly, "are you hungry enough to want toast, or would you rather eat a healthy banana". Simultaneously, appearing as selectable buttons, with a text description of the choice 58, a user playing the video would read "make toast anyway" or "no, eat a banana".

Selecting the "no, eat a banana" choice result determines that the next set of instructions to be executed are those in node 66c, wherein a media file presents an image a fruit bowl having bananas. The choice "no bananas, make toast" would be disabled because there were bananas available, as determined by the status in the variables 22 and the availability of this choice will be described in greater detail below.

Selecting the "make toast anyway" choice result determines that the next set of instructions to be executed are those in node 66d, wherein a media file presents an image of a slices of bread and a toaster, and presents selectable buttons, with a text description of the choices 58, as "yes" or "no". Selecting "no" would lead to execution of the instructions underlying nodes 66f and 66h, in which a media file representing that the observer had "change my mind", decide not to make toast and end the process. Selecting "yes" would lead to execution of the instructions underlying node 66g, in which a media file would represent three choices - "one slice", "two slices" or "three slices" on the respective selectable buttons, with a text description of those choices 58.

Selecting the "two slices" leads to node 66j, which, when executed, runs a media file presenting two slices of bread being placed in a toaster. Node 66j has no options, and the default output 44 has a pathway connected to node 66m, which is a branch node having no executable file associated. However, node 66m has 3 choices that are weighted, as described and shown in Figure 14.

If the toast comes out "under cook", as per node 66n, then the sequence of media files and choices can follow various pathways including: "re do" the toast, as per node 66q, "re position" the toast, as per node 66s, "flip the toast" as per node 66v to lead to a "Golden brown" result. A skilled person reviewing the graph of Figure 19a would appreciate that the nodes 16 and pathways 18 would execute media files that presented numerous combinations of options that lead to: a repeat of the process, as per node 66u, which returns the process being executed to the script within node 66a; or accepting that "under cook" of "burnt" is acceptable, via nodes 66r and 66x respectively, which ultimately lead to node 66y that prompts a user to be asked whether the toast needs "butter" - if the choice selected is "no" the process ends, but if the choice is "yes" then the process links to the next chapter, as per Figure 20a and 20b. Overall the process represents an interactive multi-dimensional process and is not limited by the present example.

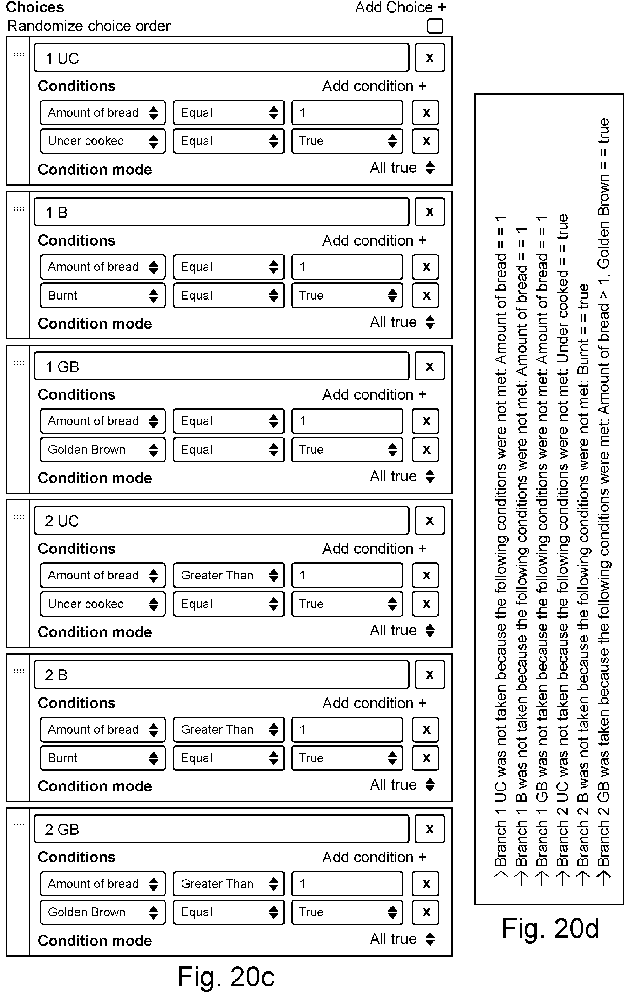

In Figures 20 and 20b, nodes 68a to 68x represent chapter 2 and continue where chapter 1 ended with a link to chapter 2 at node 66z. Chapter 2 begins with an evaluation of the status of the process of making toast by branch node 68a. The status of the process can be determined from the variables, which start with predetermined values and can be modified by the actions taken at nodes 16 in the preceding pathway 18. Therefore, not only do the choices depend on what was previously executed in the pathway, but each node 16 can have an action that determines the subsequent choices in the pathway. Choices can be presented or pathways taken depending on the status of the variables.

Figure 20c shows a portion of the node properties 12 for node 68a, in which conditions are applied to choices that were configured in the graph 6 or the workspace. Only when certain conditions 38 are met, based upon the variables 22, is a choice available or chosen. During the evaluation of the process, the rationale for each available choice is made available, as shown in Figure 20d. In this example choice " 2 GB" represents that two slices of toast were made and that they are "golden brown", that the conditions are met i.e. the number variable for the amount of bread is greater than 1, and the Boolean variable for the toast being "golden brown" is TRUE. These variables were determined during chapter 1 and, therefore, the variables are common to a pathway extending through and/or between chapters.

### Example - variables

As described above, the system 20 supporting the workspace 2 is represented in Figure 2. Nodes 16, pathways 18, node properties 12 and information from the project panel 10, such as chapter information, variables 22 and problems/errors 57 and/or performance criteria are stored in the register 28 prior to compilation. The system includes a processor for at least one of managing, analysing, compiling and evaluating the process represented by the graph 6 in the or each chapter 52. The workspace, therefore, provides a mechanism for simulating the process, in the form of a program, to be executed on a machine after the data from the register is compiled.

Figure 21a presents a view of the workspace 2 in which a portion of the graph 6 of Figure 19a is shown, and the node 66a is highlighted (by a thicker edge line). Variables 22 at the beginning of the process are shown configured in the project panel, and it is to be noted that there are three "bananas in the fruit bowl". In the node properties 12 section of the workspace 2 the choices 58 are configured for presentation to a user running the process when compiled and executing on a machine. The node properties can also include body text that provides a narrative of the actions and/or activity that occur during execution of the process during execution of the data associated with node 66a. Where the process to be executed is an interactive movie or game then the body text 44e can contain the spoken script, screenplay direction or narrative.

The node 66a is configured to present two choices: "make toast anyway", which is also the default option, and can be unconditionally connected via a pathway to node 66d, as described above in relation to Figure 19a; and "no, eat a banana", which has a condition 60 attached, namely that the variable "bananas in the fruit bowl" must be greater than zero.

At the start of the process there are 3 bananas in the fruit bowl, and a user is able to select the choice to eat a banana because the conditions are met, and when selecting this option the process is connected via a pathway 18 to node 66c, for which the node properties 12 are shown in Figure 21b.

In Figure 21b node 66c is selected, and the pathways 18 between nodes 66a, 66c, 66d and 66b are bolder to highlight the selection made. In Figure 21b the conditions 60 for each of the choices 58 are detailed, namely: "no bananas, make toast", which requires that the variable 22 "bananas in the fruit bowl" is greater than zero - in light of the process having just started, and there being three bananas available, only the latter choice is available and the process automatically connects via a pathway to node 66b, as shown in Figure 22.

In Figure 22 the node 66b the process represents a user "enjoying the banana", which could be suitably portrayed by a video clip, upon which two choices 58 are presented, namely: "I'm full", which links to node 66e to end the process; and "I'm feeling hungry", which leads the process via a pathway 18 back to node 66a to propose the options to the user, again. It is to be noted that no conditions are placed on the choices of node 66b.

As described above, variables can be updated during the execution of the process - either in the creation stage within the workspace or following compilation and during the execution of the script, derived from the data in the register 28. In this simple example, the node 66b represents a user eating a banana and, therefore, this node includes an action 56, which changes the variables 22. The action upon the variables during execution of node 66b is that: "bananas in the fruit bowl" are "subtract" by the value of "1", which updates the variables. It can be appreciated, therefore, that the set of variables is dynamic and enables the changing variables to determine the selectable choices with conditions in the selected pathway, and that these selections can change as the process is executed.

If a user selects the option "I'm feeling hungry" then the cycle of the process from node 66a to 66c and then to 66b can be repeated - theoretically indefinitely - however, the processing of the data associated with node 66b reduces the count of the variable "bananas in the fruit bowl", which started at a value of "3" and is reduced by "1" each time a user enjoys a banana as per node 66b. The process of eating bananas can repeat until all bananas are consumed, the user selects to eat a banana in node 66a and upon reaching the node 66c "check the fruit bowl" the choice to eat a banana is not available because the condition "bananas in the fruit bowl" is NOT "greater than" the value "0", while the choice "no bananas, make toast" is selected because the condition "bananas in the fruit bowl" is "equal to" the value "0". The process uses the variables to track the status of the resources.

The choice, therefore, to eat a banana is eventually removed because previous nodes in the pathway have acted upon the set of variables to reduce the count of bananas to zero, such that the variables determine the choice of pathway 18 selected i.e. the variables consider actions performed on the machine. While only one variable has been updated, a condition that determines whether a choice is selectable can take into account multiple variables.

The workspace is capable of supporting the creation of any process that can be performed on a machine, and the example of a "banana" being consumed is representative of the use of any consumables in a process, which could be a volume of material or available storage space on a solid-state hard-drive, and influences subsequent choices having conditions. Any process that involves interactive operation of a machine running executable instructions can be created in the workspace 2 using the graph 6, variables 22 and node properties 12 such that no coding is required. Further, the workspace supports evaluation because it indicates errors as the process is developed, and provides a simulation option that steps through the nodes 16 and pathways, dynamically stepping through the process represented by a graph as if it were running on a machine. For the avoidance of doubt the examples herein are not limiting and the process can define the interactive operation of any machine executable resource, including but not limited to a CNC machine, a 3D printer, a player character in an interactive video game, blocks of text in an interactive script or book, a computer-controlled non-player character in an interactive video game.

### Example - evaluation

The system 20 provides a mechanism for evaluation, including identifying errors in the workspace 2 to be identified within the register 28 and be presented in at least one of: the nodes 16 in the graph 6; problems 57 and/or performance criteria in the properties panel 10; and highlighted elements in the node properties 12. Errors, therefore, can be identified and corrected via the workspace in the user-interface in advance of compilation and execution on a machine. Not only does the workspace provide a mechanism for simulating the process, in the form of a program, to be executed on a machine after the data from the register is compiled, but the simulation presents at least one of the rationale for the choices available and the dynamic modification of the variables as the process is executed.

Evaluation of errors and/or performance factors can be presented simultaneously during the creation stage, but the graph indicating, for example, where executable content is missing or nodes are not connected in the pathway. Errors and/or performance factors can be presented anywhere in the workspace 2, e.g. in the node properties window, the problems section 16 of the panel 10 or in a window dedicated to the errors/efficiency scores.

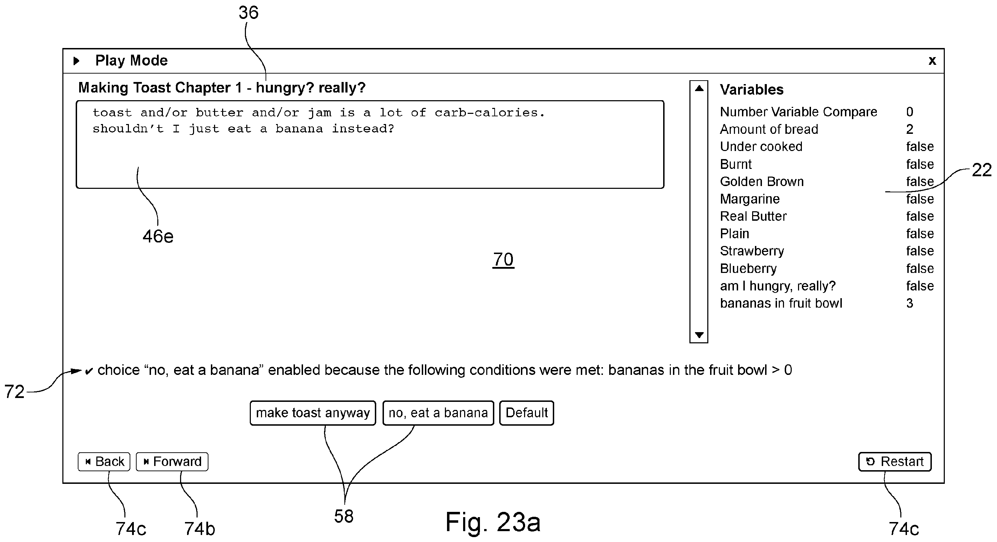

The evaluator 24 can also enable simulation of the executable instructions via the "play" 14 button. Figures 23a to 23d are a selection of steps described in relation to nodes 66a, 66b and 66c discussed above in Figures 21a, 21b and 22. The contents of a simulation are presented to a user in a window 70 that appears within the workspace 2. The window 70 for evaluation can include at least one of audio, visual and electro-mechanical simulation or presentation of information that represents the interactive experience an operator of a machine would see while executing the process e.g. a video, or a block of text representing a script.

The simulation and evaluation can commence from any of the selected nodes in the graph 6. **In** this way, the simulation window 70 can be quickly opened, an error evaluated, and closed again quickly to enable a user creating the process to select a node and modify at least one of a variable, choice and condition before selecting to 'play' 14 the process again to determine whether the error has been corrected. For the avoidance of doubt this is achieved in real-time and without compiling code, thus enabling a process to be created and evaluated simultaneously without the need for compilation and a feedback loop. The creation and evaluation modes can be quickly toggled.

Figure 23a shows the window 70 indicating the status of the process at node 66a, as per Figure 21a. The window includes the title 36 and a body of text 46e representing the narrative or script, which can be used to outline the content, purpose of screen play directions associated with the process represented by the graph 6. The window also includes the list of variables 22 and their status, and the choices 58 appear at the bottom of the window. A rationale 72 is displayed when a condition has been set for one or more of the choices 58. Each of the evaluation windows 70 can present executable data as it would appear during execution, which can be presenting a block of text, playing an audio and/or video file or a representation of a machine operation.

The simulation window 70 in Figure 23a represents the status of node 66a with variables 22 having their initial value at the beginning of the process - specifically, there are three "bananas in the fruit bowl". Two choices 58 are presented, together with the option to select the 'default' option, which is selected automatically during execution of the process in a machine, but is selectable for the purposes of evaluation. The choices are: "make toast anyway", which is also the default option, and can be unconditionally connected via a pathway to node 66d, as described above in relation to Figure 19a; and "no, eat a banana", which has a condition 60 attached, namely that the variable "bananas in the fruit bowl" must be greater than zero. The rational 72 indicates, using a tick-mark, alongside the words "Choice 'no, eat a banana' enabled because the following conditions were met: banana in the fruit bowl > 0". The evaluator, therefore, highlights why choices are selectable or not as determined by the conditions that depend on the variables.

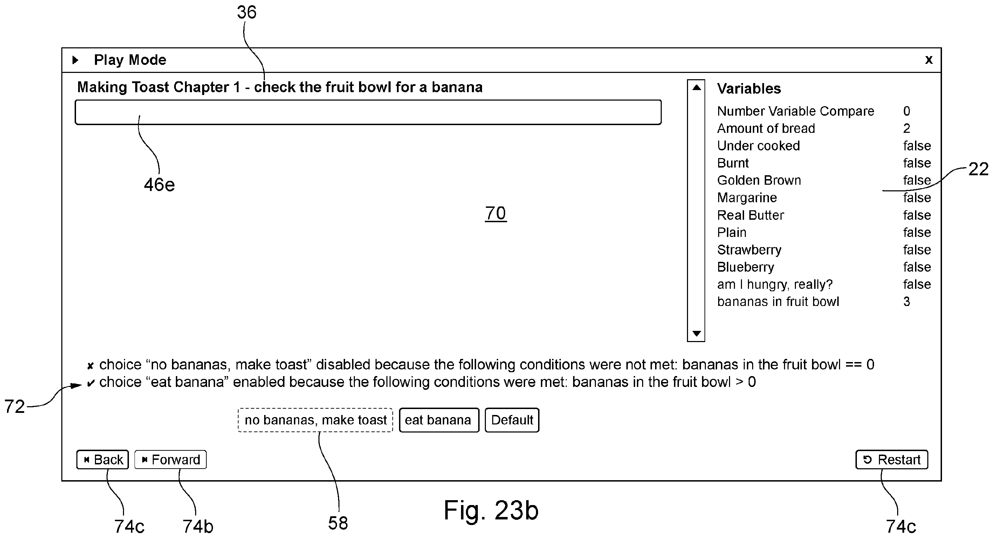

Upon selecting the "no, eat a banana" option in Figure 23a, the process steps along the pathway 18 to node 66c, for which the node properties 12 are shown in Figure 21b, and the simulation changes to the view shown in Figure 23b. As described above in relation to Figure 21b, there are conditions 60 for each of the choices 58 in node 66c, and the rationale 72 indicates the status for each choice, namely: an X-mark adjacent the words "Choice 'no bananas, make toast' disabled because the following conditions were not met: bananas in the fruit bowl = = 0", and a tick-mark adjacent the words "Choice 'eat banana; enabled because the following conditions were not met: bananas in the fruit bowl > 0".

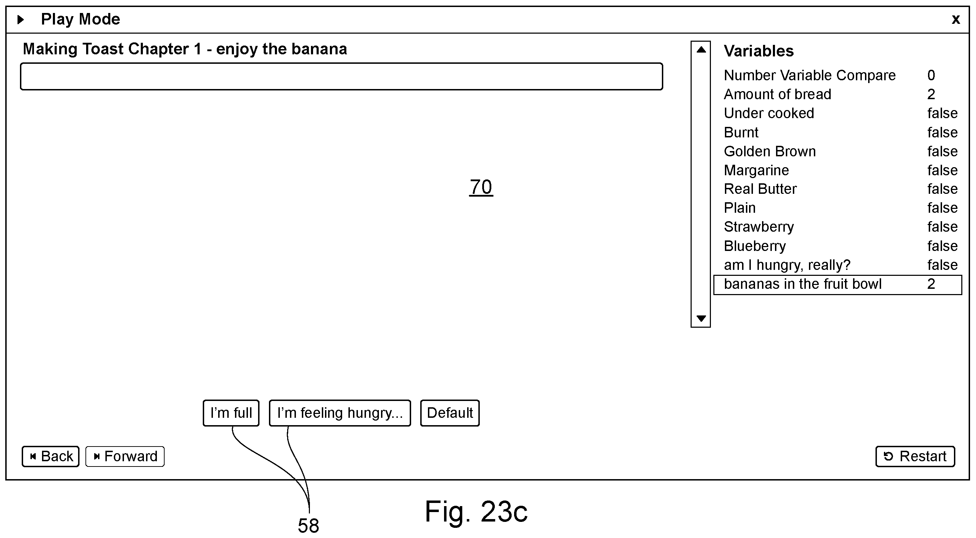

Because the process has just started, and there are three bananas available, only the latter choice is available and the process automatically connects via a pathway to node 66b, as shown in Figure 22, and represented by the window 70 in Figure 23c. The process step of node 66b, which represents a user "enjoy the banana" and, as described above, variables can be updated during the execution of the process - either in the creation stage within the workspace or following compilation and during the execution of the script, derived from the data in the register 28. **In** this example, the node 66b represents a user eating a banana and, therefore, this node includes an action 56, which changes the variables 22. The action upon the variables during execution of node 66b is that: "bananas in the fruit bowl" are "subtract" by the value of "1", as per the action 56 set in the node properties 12 of node 66b in Figure 22, which updates the variable 22 for "bananas in the fruit bowl" by changing the value from "3" to "2".

In the window 70 of Figure 23c, representing the state of the process at node 66b, the two choices 58 are presented, namely: "I'm full", which links to node 66e to end the process; and "I'm feeling hungry" because no conditions are placed on the choices of node 66b.

Assuming that the process follows a pathway and choices of always eating a banana, then this continues until the variable "bananas in the fruit bowl" reduces to "0" after the process underlying node 66b has been executed three times, because the action to "subtract" by the value of "1" occurs three times.

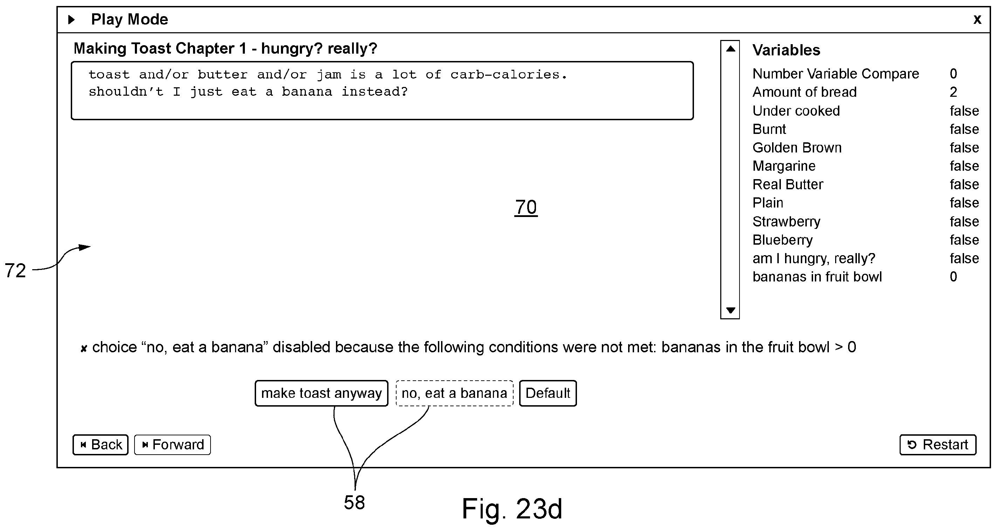

If the user subsequently selects "I'm feeling hungry" when there are no bananas left then the cycle of the process returns to node 66a, and the status appears as shown in Figure 23d, wherein the variable 22 "bananas in the fruit bowl", which started at a value of "3" and is now "0". As a consequence of there being no bananas, the rationale 72 has an X-mark adjacent the words "Choice 'no, eat a banana' disabled because the following conditions were not met: bananas in the fruit bowl > 0". Further, the choice 58 "no, eat a banana" is greyed-out, and deactivated, leaving only the "default" choice and the choice to "make toast anyway", wherein the pathway of making toast via node 66d is then followed. These evaluation windows are representative of the process that is executed on a machine following compilation.

### System overview

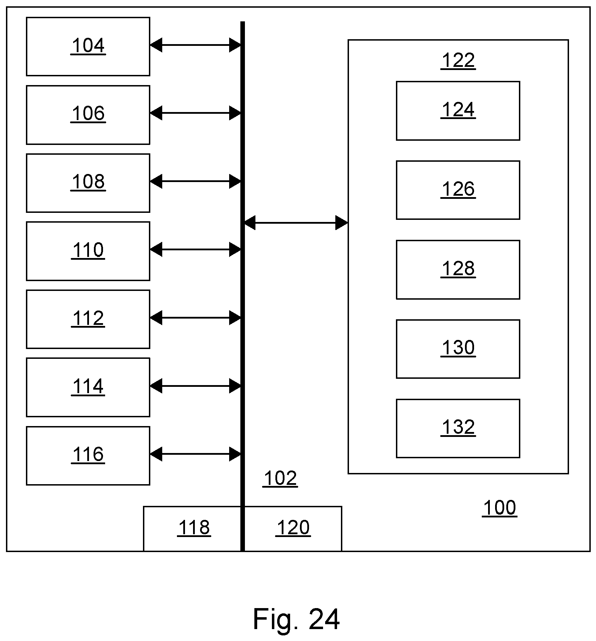

Figure 24 is a schematic 100 of components of the system 20, 100 configured to control the or each of the elements of the system for creating, compiling and/or evaluating a process via a workspace 2. By way of example, each of the workspace 2, evaluator 24, compiler 26 and register 28 can be implemented on their own system 100. The system 100 can be scalable in size to accommodate additional components that support the system, such as alternative user-interfaces or control mechanisms, such as virtual-reality headsets. The system 100 includes a bus 102, at least one processor 104, at least one communication port 106, a main memory 108 and/or a removable storage media 110, a read only memory 112 and a random access memory 114. The components of system 100 can be configured across two or more devices, or the components can reside in a single system 100. The system can also include a battery 116. The port 106 can be complimented by input means 118 and an output connection 120. The output connection can, for example, communicate with a store and/or an executor 30. The processor 104 can be any such device such as, but not limited to, an Intel^{™}, AMD^{™} or ARM^{™} processor. The processor may be specifically dedicated to the device. The port 106 can be a wired connection, such as an RS-232 connection, or a Bluetooth connection or any such wireless connection. The port can be configured to communicate on a network such a Local Area Network (LAN), Wide Area Network (WAN), or any network to which the system 100 connects. The read only memory 112 can store instructions for the processor 104.

The bus 102 communicably couples the processor 104 with the other memory 110, 112, 114, 108 and port 106, as well as the input and output connections 118, 120. The bus can be a PCI /PCI-X or SCSI based system bus depending on the storage devices used, for example. Removable memory 110 can be any kind of external hard-drives, floppy drives, flash drives, for example. The device and components therein are provided by way of example and does not limit the scope of the invention. The processor 104 can implement the methods and perform any of the calculations described herein. The processor 104 can be configured to retrieve and/or receive information from a remote server or other device.

The system 100 can also include a register 28 module 122, and a user-interface 124 for receiving input from a user. The system can include a node module 124 for storing data associated with a node and the associated properties, including executable files. A variables module 126 can be configured to store variables. An evaluation module 130 can support the simulation of the process. A compilation module 132 can convert the data within the register module 122 into machine executable script or code that can be run upon a machine, such as an executor 30 that converts the machine executable script into signals for controlling a machine.

### Process overview

Figure 1 presents an example of a workspace 2, providing a user-interface (UI) for the creation of the process, and Figure 2 presents a schematic of the elements or components of the system. It is important to appreciate that the system 20, 100 and methods of operating the system, provide a tool for creating, evaluating and compiling a process for execution on a machine, as well as the compiled file or program that can be used during the operation of a machine.

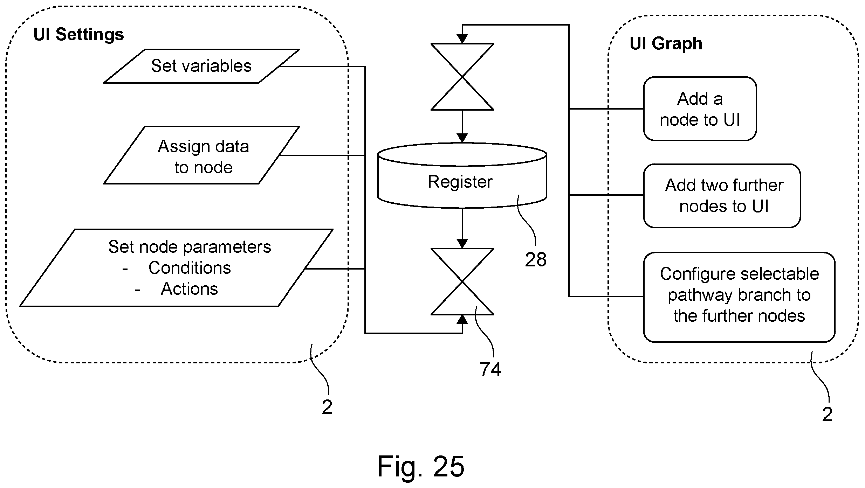

The system can be described as providing a one-stop-shop for creating, evaluating and compiling a process, and executable file therefrom, for a multi-directional interactive program for execution on a machine. Figures 25 to 28 schematically represent, respectively, the actions and architecture that support the creation, evaluation, compilation and execution of the examples described above in relation to Figures 2 to 23, which can be implements on one or more systems shown and described in Figure 24.

In Figure 25 the workspace 2 is represented by the different components of the user-interface (UI) 2. As shown, the different components are (i) the UI settings, which is represented by the project panel 10 and the node properties 12, which collect processes and specifications as written and (ii) the UI graph, which is represented by the graph 6 in the graph window 8, said graph including process specifications in the form of the nodes 16 and pathways, as represented graphically. During the creation of the process, an operator can, in the UI settings sections of the workspace 2, at least one of: set variables, assign node data and set node parameters, which can include defining conditions and/or actions associated with each node. Similarly, in the creation of the process, an operator can, in the UI graph section of the workspace 2, at least one of: add a node to the UI; and two or more further nodes; configure branches from a node that can be configured as selectable pathways between subsequent nodes on a pathway; and modify the variables and/or node properties. Information gathered from the workspace i.e. from the UI settings and the UI graph, is processed using a collator 74 for storage in the register 28. The collator functions to extract and store the created content and relationships in the register 28. The collator retrieves both written data e.g. settings and graphical data e.g. nodes, pathways and connections, and the relationships therebetween.

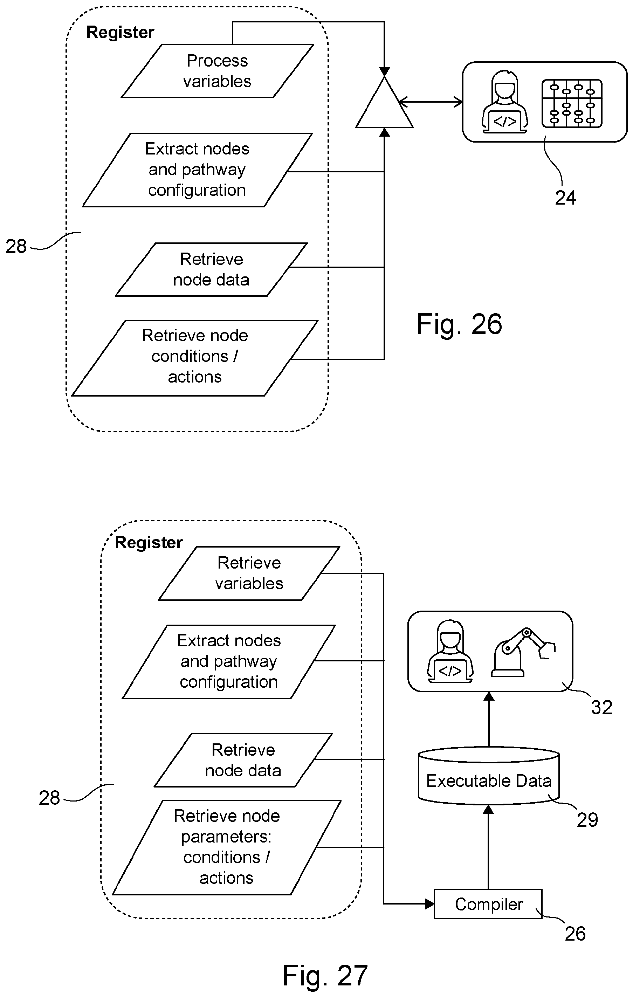

Using the written and graphical data collated 74 and stored in the register 28, and the relationships therebetween, the system 20, 100 is operable to retrieve data from the register 28 and processes said data using the evaluator 24, as represented by the system in Figure 26. The workspace 2 provides a play button 14 that initiates an evaluation mode in the system 20 that opens a window as per Figures 23a to 23d described above that provides a step-by-step evaluation of the process. The evaluation includes extracting data from the register 28 and at least one of: processing variables, such that their status can be monitored as the processes moves along the selected pathway 18; determining the created nodes and pathway configuration; retrieving node data, which includes information on branches or choices; and determining the node conditions and/or actions, and their interaction with the register. The system offers a UI workspace 2 that enables the creation of a process, and the evaluation of the process, e.g. in a stepwise fashion, which avoids the need for an intermediate compilation of the data before errors and/or required changes can be corrected.

In the examples shown in Figures 1 through to 23d the system provides a play button 14 that enables a user to open a new window and toggle between creation and evaluation mode i.e. creation mode appears as a UI in which the process is written and represented graphically, e.g. as shown in Figure 1, and evaluation mode, in which an operator can simulate a step by step review of the process and the changing variables, e.g. as per Figures 23a to 23d.

Additionally or alternatively, the creation mode and evaluation mode can be displayed simultaneously in separate windows, which can be displayed side-by-side. The ability to evaluate while creating can minimise the computational processing required to identify and correct errors in the process because errors are flagged in the workspace e.g. missing data and/or executable files and/or discoverable in the stepwise evaluation of the process. The evaluation can be performed for a single workspace 2 configuration, which can be analysed following a simulation by the evaluator 24. A comparison of an actual score of the problems and/or performance criteria can be compared against an actual score. The workspace can identify the location of the problems or criteria, each of which can be sorted according to the score.

Figure 27 is a schematic representation of the system 20 compilation of the data gathered by the collator 74 for storage in the register 28. The compiler 26 accesses the register to retrieve variables, extract node and pathway data, retrieve node data and retrieve node parameters, including conditions and/or actions. The compiler outputs executable data 29 in the form of an output file, such as an XML or JSON file, that can be processed by an executor 30 and/or a machine 32. The system can also convert the data into an interactive portable document format (PDF) file.

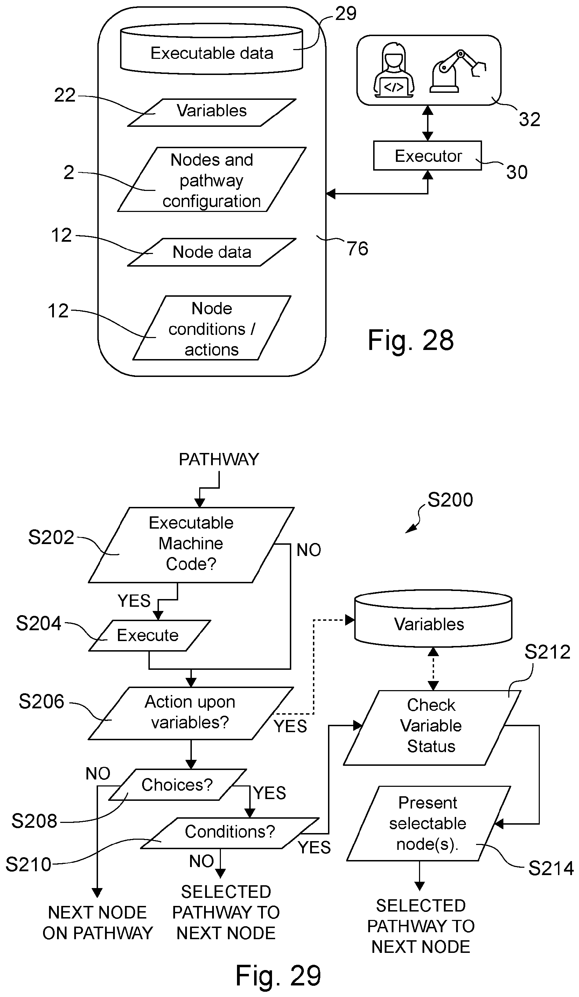

Figure 28 shows a representation of an executable file 76 that contains the executable data, variables, nodes and pathways configuration, node data and node conditions/actions - all of which can be processed by an executor 30 for operating a machine 32. The machine can have multiple actuators and variable resources e.g. a CNC machine, that can be operated in multiple configurations. The system 20, therefore, enables a process to be created, evaluated, compiled and subsequently executed on a machine such that the machine can operate or be operated through an interactive multi-directional pathway of operations that include branching. The execution of the process on the machine can be non-linear and include multiple formats.

The system 20 is particularly suited for the creation and development of interactive video games and/or multimedia film or television, in which at least one of audio, visual and electro-mechanical e.g. haptic executable data is implemented in a single game, program or film. The system is not limited to an 'if-then' logical implementation of scenes and, instead, enables the creation, evaluation, compilation and execution of multiple data formats that are executable in media actions across multi-directional pathways. This provides for the interactive non-linear operation of a machine e.g. a television or gaming console. The multi-dimensional and non-linear capability compliments gaming aspects, such as monitoring and updating the status of a player character and the consequence of their actions. For example: a player character can influence the environment around themselves and the process can track the history of the locations that they have been and the objects observed in those locations; the health of the player character can be tracked, and the variables used to monitor and update the capabilities of the character; and an inventory of the player characters possessions can be held and monitored e.g. weapons, potions, keys.

The data retrieved from the UI becomes executable data and the process can be run on a machine, such as media console e.g. television, personal computer or games console. Reference has also been made above to CNC machines and 3D printers, and the process can use the variables and conditions to determine operator actions by considering, for example, the available raw materials required to manufacture, the ancillary materials e.g. required to lubricate the machine, or even the status of the machine itself e.g. is it overheating or vibrating excessively. The process can also be applied to player characters and non-player characters in an electronic game. Interaction with, and the selection of choices associated with a non-player character would not be provided by a human operator and, instead, would be based on the environmental variables associated with the location and activity of the non-player character e.g. execution of the actions of a non-player character's process can be determined by actions taken by a player character.

During the creation and/or evaluation, as described above in relation to Figure 26, at least, the register 28 operates to capture and log a history of previous activity. This history can include the pathways 18 selected, choices made in the nodes 16, and actions taken by those nodes. Holding a history enables: a retrospective analysis of the performance of said route through the nodes and pathways, said performance including at least one of the error-count, computational resource of the machine to compile and/or execute the script represented by the selected path and the resources required to execute an external machine or process using said program; and enable a user and/or evaluation tool recall which pathways and nodes have already been evaluated, thus enabling a user and/or evaluation tool to return to a previous end-point to continue evaluation. The history retained in the register can be cleared.

The performance evaluation can enable determination of the order of the execution of nodes and/or dwell time in the execution e.g. while actions are performed during the real-world execution of the program represented by the nodes 16 and pathways 18. Evaluation can identify nodes 16, pathways 18, outputs 44 and/or variables 22 that are under-utilised or not utilised, e.g. nodes and/or pathways have been missed out, thus identifying areas of defunct or inefficient code.

Examples above have described the creation, evaluation and compilation of a process for execution via machines with multi-parameter outputs or multi-media formats, such as programs for manufacturing machines, games or interactive television. A process, however, can be created, evaluated and compiled for implementation in a text-based document. The text-based document includes a combination of text and links. In previous examples nodes included executable data that can, for example, perform a machine operation or play a video. In a text-based document the node data includes a block of text, and at the end of said block links are presented, said links representing choices. The choices can be selectable based upon underlying variables. Blocks of text, when selected, can incorporate actions upon the variables. The choices can have underlying conditions that determine their selectability. The examples herein bring the creation, evaluation, compilation and execution process together - whether it is a process for an interactive video game, or a text-based document, such as an interactive electronic book or a script for an interactive game or film. Figures 21a through to 23d describe an example in which the configuration of the nodes impact on the execution of the process i.e. the conditions upon the choices at branch points on the pathway and actions taken at a node interact with the variables. Figure 24 relates to a system that can implement one of more components required to execute the process, and Figures 25 to 28 highlight that the process of creating, evaluating and compiling a process for execution on a machine involves data including the variables, nodes and pathway configurations, node data e.g. executable content, choices, conditions, actions, parameters, events.

More generally, Figure 29 illustrates the steps S200 that can underly a node, which can be performed by the system 20, 100 or a processor of such a system. The steps shown represent actions taken by a node in a pathway between a previous node and a subsequent node. The steps shown can be optional, and further steps can be added. Multiple actions can be implemented and/or multiple conditions can be assessed during the execution of the data associated with each node. The steps shown can also be performed in a different order from the order illustrated in Figure 29. The steps shown in the figure are described together for the purpose of demonstrating (i) the role that the variables 22 play, and (ii) the impact of a node's configuration on at least one of the creation, evaluation, compilation and execution of the process. The node, therefore, can function as an interactive building block that determines selectable choices on a pathway based on underlying variables and the graph 6 created.

The steps S200 represent a node 16 having an input from a 'pathway' 18 and an output to a 'next node on pathway' 18 or the 'selected pathway to next node', as illustrated in Figure 29. Upon creating a node, executable data can be added S202. Data added can be at least one of an audio file, video file or audio-visual sequence, such as a scene from a video game. The data added can be a block of text, e.g. for an electronic book or script for a game or film, which can be executed on a computing device e.g. a phone, tablet or e-reader e.g. Amazon^{™} Kindle^{™}. The data could also be an instruction for an electro-mechanical machine to perform an operation e.g. a CNC machine. This step is optional because some nodes, e.g. branch nodes, do not require executable data to be included. If, however, a node requires executable data and none is attached, then the node shown in the UI of the workspace 2 contains an error indicator or notification 40. In this way, the presence of data can be evaluated. During the compilation of the process, the compiler 26 retrieves data from the register 28 for compilation. Similarly, during execution of the process, an executor can extract node data, which can include machine instructions, and execute S204 the data on a machine.

In addition to processing S202, S204 machine code associated with the node 16, an action can be added S206 to update the variables. An example of an added action S206 is described above in relation to Figure 22 and 23c, wherein the node properties are configured to specify the action to be taken upon the variables during evaluation and execution, and the variables can be observed updating during evaluation.

The action upon the variables S206 is configured during creation in order for the process, when executed, to factor in activity occurring at previous nodes in the pathway. The variables, therefore, can be considered to keep a dynamic record of the preceding node activity on the pathway, which supports interactive and multi-dimensional management of the process to be implemented on a machine. During evaluation and/or compilation the actions are retrieved as part of the node data and held in the register. During execution, an executor 30 monitors the status of the variables 22 and the actions taken upon the variables S206. A video player can be embedded in the evaluator, such that pre-compilation, any multi-media files included in a node can be played back.

Nodes 16 can be created with choices S208, which are branches in the pathway 18. If there is no choice, or only the default choice is available, then the process automatically proceeds to the 'next node on the pathway' as illustrated. If, however, choices are available, the choices can be configured with conditions S210. In the absence of conditions 60, S210 the process proceeds along the 'selected pathway to the next node', as illustrated. When choices 38 are created with conditions 60 the associated variable status is checked S212 i.e. the process looks up the status of the variables and determines whether conditions are met for a choice to be available, or not. Checking the variable status S212 can also be performed: during the evaluation of the process (see Figures 23a to 23d) by an evaluator 24 retrieving the conditions and variables from the register 28; during compilation, in which conditions and their relationship with the variables are set and compiled by a compiler 26; and during execution, wherein the executable file compiled holds the node 16 configuration that determines the selectable choices when conditions are set.

During the creation process, the conditions applied to choices are configured. At this early stage it can be difficult to appreciate the dynamic relationship between the nodes and their selectable choices, which can vary depending on the variables, which are dynamically changeable by actions performed by nodes on the preceding pathway. It follows, therefore, that the ability to present selectable nodes - accessed through the choices made - are determined during the configuration in the creation stage, and can be checked during the evaluation stage in which the evaluator 24 can check the variable status S212 and present the selectable pathway in the form of a user-selectable button, or deactivate a button e.g. by greying it out and removing its functionality.

As described above, the evaluator 24 can use the data captured from the workspace to enable a step-by-step analysis to be performed on the graph by following through the pathways 18 via the nodes 16 and the choices they present. At each nodes, an action can be performed upon the variables that can determine the choices upon any one of the subsequent nodes in the pathways. The ability to assess the properties of the overall workspace, its performance and associated errors requires a global evaluation.

A global evaluation, by the evaluator 40, can be performed in addition to or as an alternative to the step-by-step evaluation. A global evaluation can provide a pre-compilation evaluation e.g. simulation of the complex post-compilation execution of a program for a machine, and the performance of the program and/or the machine post compilation. A global evaluation is likely to generate a unique result for each configuration of the workspace, which has numerous variables, nodes with choices and pathways.

Determining the performance of the program and/or the machine results in a quantity or errors being determined. Errors can be derived from unused variables, nodes, choices or pathways, which will result in unnecessary compilation costs and/or increase storage requirements or reduce the performance of the executed program. The performance level of the executable program upon a machine can be determined. The processing cost of executing the program and/or the resources required to operate the machine e.g. processing cost, systems requirements etc can be determined. Moreover, the performance of the machine can be evaluated, and the quantity of resources required to support the machine while operating a program compiled from the workspace 2 can be determined per-compilation e.g. without testing and evaluating a compiled program upon the machine.

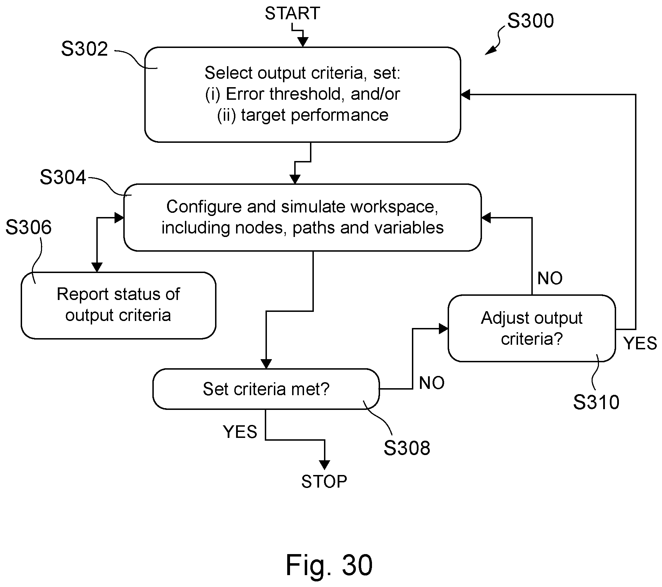

Figure 30 shows a process S300 implementable by the evaluator 24 that enables output criteria to be set e.g. a threshold level of errors and/or performance is set. The setting S302 of the output criteria can be set by a user and/or be determined by at least one of the compiler and/or the machine for executing the program represented by the workspace 2. During setting S302, an error threshold and/or target performance level can be set. The workspace 2 can be configured and then simulated S304, with each configuration of nodes, paths and variables having associated problems and/or a direct impact on the compilation and subsequent execution of a machine operating according to the workspace 2 configuration. In S304, the evaluator can determine an analysis profile for the or each of the factors described herein.

The problems and/or performance criteria can be reported S306. The evaluator 24 can provide a scored and/or weighted for each factor, problem, inefficiency and type of problem. A threshold score can be established for each problem, group of problems and/or for the script as a whole. The evaluator can also determine the performance of the compilation and/or machine. Each of the criteria of the workspace 2, be it the error threshold or a target performance, is determined by the evaluator through a simulation of the script represented by the workspace and reported S306. In this way, determining the performance in the pre-compilation phase supports effective and/or efficient compilation and execution, which can be matched to the machine. The overall report S306 can be used in conjunction with the step-by-step analysis taught elsewhere herein. Pre-compilation analysis is based on the post-compilation and subsequent execution of the machine 32.

The evaluator 24 can determine S308 whether the criteria is met by comparing the outcome in the report S306 against the criteria set S302. If the criteria are met then the simulation of the script represented by workspace 2 can be compiled. If the criteria are not met, the output criteria can be adjusted S308 by reconfiguring the criteria at S302, or reconfiguring the workspace at S304.

In more detail, S304 includes a configuration and subsequent simulation of the workspace 2. Simulation includes obtaining the common data set from the register 28, wherein the simulation can be performed on a single instance of the workspace 2, as configured by a user. Each change made to the workspace 2 can result in an automatic update of the scores, said automatic evaluation running through all possible executions of the script. During the evaluation, the evaluator simulates the operation of a machine using the script as represented by the nodes, pathways and variables upon the workspace. Errors, inefficiencies and performance factors associated with the script, as compiled, and the machine operation can be determined through the simulation pre-compilation. Simulation can be performed in-between each user modification of the workspace 2.

A single change can have an avalanche effect on the errors and/or performance within the script, therefore the simulation pre-compilation is necessary to avoid problems occurring during and post-compilation during execution of the machine. Simulation using the evaluator 24 is key to the subsequent performance and is performed with no user intervention or revision of the workspace 2. While a user has the option to reconfigure the workspace in response to the report S306, the simulation of a workspace 2 can have a multitude of calculations because of the global variables and multiple nodes and pathways, which define a non-linear executable script e.g. screenplay script for a game or movie, or instructions for a machine e.g. 3D printer that adapts to external conditions.

During evaluation S304 and reporting S306, errors can be identified and simulation can be performed upon, by way of non-limiting examples: resources consumed by the machine operating as per the script represented by the workspace 2; a count of tagged content and/or actions; screenplay script characteristics, which can determine the length of scenes, acts and/or the complete performance associated with the screenplay; characters required in a screenplay; cameras and/or viewing angles e.g. shots required in a screenplay; technical equipment requirements, which can be specified in nodes 16, can be simulated e.g. lighting and/or audio equipment resources can be evaluated; screenplay characteristics e.g. simulation of the length and/or number of chapters, scenes, choices, pathways, options, endings, outcomes and variables; the relationships between different pathways e.g. convergence and divergence factors of the pathways 18; the quantity of endings relative to the possible pathways to said endings; and utilisation levels of nodes, pathways and/or variables.

The report S306 is output following simulations of execution time, processing cost and storage space post-compilation. An analysis profile for the or each of the problems and/or efficiencies of the resources listed above can determine a score, which can be compared S308 against a target S302.

Thus, the present disclosure provides technical solutions to a variety of technical problems, including, but not limited to, those mentioned above.

While several embodiments of the present disclosure have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present disclosure. More generally, those skilled in the art will readily appreciate that all parameters, dimensions, materials, and configurations described herein are meant to be exemplary and that the actual parameters, dimensions, materials, and/or configurations will depend upon the specific application or applications for which the teaching of the present disclosure is/are used. Those skilled in the art will recognize or be able to ascertain using no more than routine experimentation, many equivalents to the specific embodiments of the disclosure described herein. It is, therefore, to be understood that the foregoing embodiments are presented by way of example only and that, within the scope of the appended claims and equivalents thereto, the invention may be practiced otherwise than as specifically described and claimed. The present invention is directed to each individual feature, system, article, material, and/or method described herein. **In** addition, any combination of two or more such features, systems, articles, materials, and/or methods, if such features, systems, articles, materials, and/or methods are not mutually inconsistent, is included within the scope of the present invention.

The indefinite articles "a" and "an," as used herein in the specification and in the claims, unless clearly indicated to the contrary, should be understood to mean "at least one." The phrase "and/or," as used herein in the specification and in the claims, should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. **In** general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03. Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

The invention also consists in any individual features described or implicit herein or shown or implicit in the drawings or any combination of any such features or any generalisation of any such features or combination.

### ENUMERATED CLAUSES

Embodiments of the present disclosure are provided in the following enumerated clauses for the purpose of illustration, and without limitation.

Features mentioned below in respect of one set of enumerated clauses or aspect of the disclosure are not intended to be limited in such a regard and any feature(s) mentioned in respect of one set of clauses may be incorporated into one or more of the other sets of clauses.

Clause 1.1: A method of compiling instructions for execution of an interactive media program on an electronic device for an interactive game or movie, the method comprising: retrieving data derived from a set of nodes representable graphically on a user-interface, said set of nodes connected via pathways, wherein the pathways define routes through the set of nodes, and said data includes: machine-executable content and/or script; and variables that determine selectable pathways between the set of nodes; and compiling said data into machine-readable instructions for executing in a machine configured to execute the machine-executable content and/or script.

Clause 1.2: The method of clause 1, wherein execution of the machine-readable content and/or script enables at least one of: determination of the selectable pathways at a specific node within the set of nodes based on the variables, wherein the variables include initial variables and/or latest variables updated by actions performed on the preceding pathway; and updating the initial variables and/or latest variables based updated by actions performed at a specific node within the set of nodes.

Clause 1.3: The method of any preceding clause, wherein execution of the machine-readable content and/or script determines multi-directional interactive routes through the pathways, said routes determined by nodes based on initial values of the variables and/or updated values of the variables that determine the latest variables as a consequence of previously executed actions performed on the preceding pathway.

Clause 1.4: The method of any preceding clause, wherein each pathway defines a sequential order in which the machine-executable content and/or script is executed.

Clause 1.5: The method of any preceding clause, wherein the data is retrieved from a common data set including at least one of: the machine-executable content and/or script; the variables that determine selectable pathways between the set of nodes; actions that are the outcome of the execution of the machine-executable content and/or script; and a plurality of formats, wherein the common data set is compiled simultaneously.

Clause 1.6: The method of any preceding clause, wherein the set of nodes comprises: a start node that only has an output connection; an intermediate node having an input connection and an output connection, and connected to the start node via a pathway; and an end node only having an input connection, and connected to the intermediate node.

Clause 1.7 The method of clause 1.6, wherein the set of nodes includes at least one of: a plurality of end nodes, and a plurality of pathways connecting the start node, at least one intermediate node and each of the plurality of end nodes; a plurality of intermediate nodes; at least one of the start node and an intermediate node have a plurality of output connections.

Clause 1.8: The method of any preceding clause, wherein the selectable connections to a subsequent node on the pathway is determined from data defining conditions and/or weightings at a specific node and include at least one of: a default connection, when no action is taken or input is available; a first connection based on a condition, wherein said condition is determined from the status of the variables; a second connection based on an alternative conditions determined from the status of the variables.

Clause 1.9: The method of any of clauses 1.1 to 1.7, the selectable connections to a subsequent node on the pathway is determined randomly.

Clause 1.10: The method of any of clause 1.9, wherein the selectable connections are weighted such that the probability of connecting to one subsequent node is higher than connecting to another subsequent node.

Clause 1.11: The method of any preceding clauses, wherein the variables are changeable and include: a Boolean variable, changeable to either a true status or a false status from an initial given value; a number variable that can be set, added or subtracted from an initial given value; a string variable that can be checked against an initial set of characters that, when they match, returns a true statement.

Clause 1.12: The method of any preceding clause, wherein a pathway is selectable from a specific node if a condition at the specific node in the pathway has been met, condition determining at least one of whether: a condition is equal to or not equal to a Boolean variable, which is either true or false; a numerical condition is equal, not equal, less than or more than a number variable; a text entry matches, at least in part, a string variable.

Clause 1.13: The method of clause 1.12, wherein a pathway is selectable if multiple conditions have been met.

Clause 1.14: The method of any preceding clause, wherein each node in the set of nodes contains data including at least one of: properties of the node, including at least one of a title of the node, a description of the node, a summary of the node, a text description of the node, script, descriptions of the asset that the node represents and a media file; actions that modify the variables; selectable connections to a subsequent node on the pathway; content including information associated with the function of the node; executable files; links to external files; parameters; events; and machine-executable script.

Clause 1.15: The method of any preceding clause, wherein each node in the set of nodes is one of: an action node, including at least one of an instruction to update the variables, connections to selectable pathways determinable based on conditions that evaluate the variables, data for controlling an external device, and a multimedia data configured to play a multimedia file; an evaluation node, including at least one of an instruction to update the variables, and connections to selectable pathways determinable based on conditions that evaluate the variables; and a weighted node, configured to automatically evaluate the state of the variables at said weighted node and automatically select the next node.

Clause 1.16: The method of any preceding clause, further including providing a graphical user-interface, creating the set of nodes and the pathways on the graphical user-interface and entering data associated with said set of nodes on said graphical user-interface.

Clause 1.17: A method of evaluating data representing machine-executable script for compilation into machine-readable instructions that executes said machine-executable script for execution of an interactive media program on an electronic device for an interactive game or movie the method comprising: retrieving data from a register, said register containing data derived from a set of nodes recorded on a user-interface, said nodes connected via a pathway and representable graphically, said data including machine-executable content and/or script, and a set of variables associated with the set of nodes, said set of variables including an initial value and/or a present value determined by the machine-executable content and/or the script in the data on the selected pathway between the connected nodes; determining for at least one pathway whether at least one pathway of connected nodes is executable and/or comprises errors above a threshold, and/or at least one of: presenting the errors in the data for revising the data for the set of nodes, and updating the set of nodes to reduce the errors below the threshold.

Clause 1.18: The method of clause 1.17, further comprising assembling and converting the data into machine-readable instructions for executing in a machine configured to perform the machine-executable script if the errors are below the threshold.

Clause 1.19: The method of clause 1.17 or 1.18, further comprising at least one of: determining for at least one node the selectable nodes in the pathway to which the at least one node can proceed based on a condition, said condition determined from the present value of the set of variables at the at least node on the pathway; updating the set of variables based on the pathway selected; and updating the set of nodes in the preceding pathway.

Clause 1.20: The method of any of clauses 1.17 to 1.19, wherein the errors are presented on the user-interface.

Clause 1.21: The method of clause 1.20, wherein the user-interface includes at least one of: a node window, in which a set of nodes are configurable and connectable via pathways, wherein an error with a node is indicated with a flag upon the node; a project panel, configured to display a list of errors; and a properties panel, which lists the properties of a selected node and highlights the error associated with said node.

Clause 1.22: The method of clause 1.21, wherein selecting the error in either the node window or the project panel automatically presents the selected error in at least one of the corresponding node window, the project panel and properties panel.

Clause 1.23: A method of providing a user-interface for evaluating and/or compiling data representing machine-executable script for compilation into machine-readable instructions that executes said machine-executable script for execution of an interactive media program on an electronic device for an interactive game or movie, the method comprising: providing a user-interface having: a first window including a set of nodes are representable graphically, said nodes connected via a pathway said data including machine-executable content and/or script; and at least one of: a second window including a configurable list of variables and/or errors associated with the set of nodes, said variables including an initial value and/or a present value determined by the machine-executable content and/or the script in the data on the preceding pathway; and a third window including properties of a selected specific node selected in the first window; and collating the graphical representation of the set of node and/or the variables and/or the properties from the first window and the second window and/or the third window for incorporation with the data; and determining for at least one pathway whether at least one pathway of connected nodes is executable and/or comprises errors above a threshold, and/or at least one of: presenting the errors in the data for revising the data for the set of nodes, and updating the set of nodes to reduce the errors below the threshold.

Clause 1.24: The method of clause 1.23, further comprising assembling and converting the data into machine-readable instructions for executing in a machine configured to perform the machine-executable script if the errors are below the threshold.

Clause 1.25: The method of clause 1.23 or 1.24, further comprising at least one of: determining for at least one node the selectable nodes in the pathway to which the at least one node can proceed based on a condition, said condition determined from the present value of the set of variables at the at least node on the pathway; updating the set of variables based on the pathway selected; and updating the set of nodes in the preceding pathway.

Clause 1.26: The method of any preceding clause, further comprising determining for each possible pathway at least one of: the resources required to execute the machine-executable script; the number of actions required to perform the machine-executable script; and the time required to execute the machine-executable script.

Clause 1.27: The method of any of clauses 1.21 to 1.26, wherein selecting an error in either the first window or the second window highlights the corresponding error in the other windows enabling simultaneous presentation for the selected node of at least two of: parameters of the selected node; the status of the variables at said selected node upon the pathway; the available choices of actions to take that lead to different nodes on the pathway; and notes on the available choices and the corresponding conditions based on the variables that were met that explain said availability.

Clause 1.28: The method of clause 1.27, wherein the user-interface presents: dynamically acceptable choices to enable the screen to change the selected node to the next node upon the pathway, based on the available choices; and/or a backwards and forwards buttons that enable a step-wise selection of the nodes in the pathway.

Clause 1.29: The method of clause 1.27 or 1.28, wherein variables are dynamically changed as the selected node changes.

Clause 1.30: The method of any preceding clause, wherein determining for at least one pathway whether at least one pathway of connected nodes is executable includes indicating for a specific node at least one of: the selectable connections, the non-selectable connections, the conditions enabling connection or otherwise.

Clause 1.31: A non-transitory computer-readable storage medium having stored thereon executable instructions that, as a result of being executed by a processor of a computer system, cause the computer system to perform the method of any preceding clauses.

Clause 1.32: A computer system comprising a plurality of machine elements, wherein each machine element in the computer system comprises: a processor; and memory including executable instructions that, as a result of execution by the processor, configures the system to perform the method of any of clauses 1. 1 to 1.30.

## Claims

1. A method of evaluating data representing machine-executable script for compilation into machine-readable instructions that executes said machine-executable script for execution of an interactive media program on an electronic device for an interactive game or movie the method comprising:
retrieving data from a register, said register containing data derived from
a set of nodes recorded on a user-interface, said nodes connected via a pathway and representable graphically, said data including
machine-executable content and/or script, and
a set of variables associated with the set of nodes, said set of variables including
an initial value and/or
a present value determined by the machine-executable content and/or the script in the data on the selected pathway between the connected nodes;
determining for at least one pathway
problems, errors and/or performance criteria with respect to a threshold, and and/or at least one of:
presenting the errors in the data for revising the data for the set of nodes, and
receiving updates to the set of nodes to reduce the problems, errors and/or performance criteria below the threshold.

2. The method of claim 1, further comprising assembling and converting the data into machine-readable instructions for executing in a machine configured to perform the machine-executable script if at least one of the problems, errors and/or performance criteria are below the threshold.

3. A method of providing a user-interface for evaluating and/or compiling data representing machine-executable script for compilation into machine-readable instructions that executes said machine-executable script for execution of an interactive media program on an electronic device for an interactive game or movie, the method comprising:
providing a user-interface having:
a first window including a set of nodes are representable graphically, said nodes connected via a pathway said data including machine-executable content and/or script; and
at least one of:
a second window including a configurable list of variables and/or problems, errors and/or performance criteria associated with the set of nodes, said variables including an initial value and/or a present value determined by the machine-executable content and/or the script in the data on the preceding pathway; and
a third window including properties of a selected specific node selected in the first window; and
collating the graphical representation of the set of node and/or the variables and/or the properties from the first window and the second window and/or the third window for incorporation with the data; and
determining for at least one pathway whether at least one pathway of connected nodes is executable and/or comprises problems, errors and/or performance criteria above a threshold, and/or
at least one of: presenting the problems, errors and/or performance criteria errors in the data for revising the data for the set of nodes, and receiving updates to the set of nodes to reduce the problems, errors and/or performance criteria below the threshold.

4. The method of claim 3, further comprising assembling and converting the data into machine-readable instructions for executing in a machine configured to perform the machine-executable script if the problems, errors and/or performance criteria are below the threshold.

5. The method of claim 3 or 4, further comprising at least one of:
determining for at least one node the selectable nodes in the pathway to which the at least one node can proceed based on a condition, said condition determined from the present value of the set of variables at the at least node on the pathway;
updating the set of variables based on the pathway selected; and
updating the set of nodes in the preceding pathway.

6. The method of any preceding claim, further comprising determining for each possible pathway at least one of:
the resources required to execute the machine-executable script;
the number of actions required to perform the machine-executable script; and
the time required to execute the machine-executable script.

7. The method of any of claims 3 to 6, wherein selecting a problem, error and/or performance criteria in either the first window or the second window highlights the corresponding problem, error and/or performance criteria in the other windows enabling simultaneous presentation for the selected node of at least two of: parameters of the selected node; the status of the variables at said selected node upon the pathway; the available choices of actions to take that lead to different nodes on the pathway; and notes on the available choices and the corresponding conditions based on the variables that were met that explain said availability.

8. The method of claim 1, further comprising: storing within the register a common data set including at least one of: machine-executable content and/or script; the variables that determine selectable pathways between the set of nodes; actions that are the outcome of the execution of the machine-executable content and/or script; and a plurality of formats including game-play simulations, wherein the common data set can be collated and/or compiled simultaneously, such that it can be evaluated prior to compilation.

9. The method of claim 1, wherein during evaluation S304 and reporting S306, errors can be identified and simulation can be performed upon at least one of:
resources consumed by the machine operating as per the script represented by the workspace 2;
a count of tagged content and/or actions;
screenplay script characteristics, which can determine the length of scenes, acts and/or the complete performance associated with the screenplay;
characters required in a screenplay;
cameras and/or viewing angles e.g. shots required in a screenplay;
technical equipment requirements, which can be specified in nodes 16 for simulation evaluation for lighting and/or audio equipment resources;
screenplay characteristics e.g. simulation of the length and/or number of chapters, scenes, choices, pathways, options, endings, outcomes and variables;
the relationships between different pathways for evaluation of the convergence and divergence factors of the pathways 18;
the quantity of endings relative to the possible pathways to said endings; and
utilisation levels of nodes, pathways and/or variables.

10. A method of writing an electronic script for an interactive game or move, said script comprising: interactive multiple pathways that determine the order in which the script is executed; and nodes in the pathways that comprise: machine instructions for execution on a machine; and branch connections for determining selectable pathways

11. The method of claim 9, wherein the script further includes variables and determines selectable branch connections based on the status of the variables.

12. A non-transitory computer-readable storage medium having stored thereon executable instructions that, as a result of being executed by a processor of a computer system, cause the computer system to perform the method of any preceding claims.

13. A computer system comprising a plurality of machine elements, wherein each machine element in the computer system comprises: a processor; and memory including executable instructions that, as a result of execution by the processor, configures the system to perform the method of any of claims 1 to 11.
